# EUROPÄISCHE PATENTSCHRIFT

(11) **EP 2 870 091 B1**
(45) Veröffentlichungstag und Bekanntmachung des Hinweises auf die Patenterteilung: **10.08.2016**
(21) Anmeldenummer: 13731764.0
(22) Anmeldetag: 26.06.2013
(51) Int. Cl.: B65G 57/03, B65G 57/22, B65G 65/00

(54) **VORRICHTUNG UND VERFAHREN ZUM MEHRLAGIGEN BESTAPELN EINER UNTERLAGE SOWIE ENTSPRECHENDE VERWENDUNG**
DEVICE AND METHOD FOR LAYERED STACKING A SUPPORT AS WELL AS CORRESPONDING USE
DISPOSITIF ET PROCÉDÉ POUR EMPILER DES ARTICLES EN PLUSIEURS COUCHES SUR UN SUPPORT AINSI QUE L'UTILISATION CORRESPONDANTE

(30) Priorität: 06.07.2012 DE 102012106112
(43) Veröffentlichungstag der Anmeldung: 13.05.2015
(73) Patentinhaber: Dematic GmbH, 63150 Heusenstamm (DE)
(72) Erfinder: CAVELIUS, Jörg, 61118 Bad Vilbel (DE)
(74) Vertreter: Moser Götze & Partner Patentanwälte mbB
(86) Internationale Anmeldenummer: PCT/EP2013/063342
(87) Internationale Veröffentlichungsnummer: WO 2014/005893

(56) Entgegenhaltungen:
- EP-B1- 1 462 394
- WO-A1-2010/047595
- DE-A1- 2 011 458
- DE-U1-202010 015 150
- NL-C2- 1 018 885
- US-A- 5 927 927

## Beschreibung

Die Erfindung betrifft eine Vorrichtung zum automatischen Stapeln von Packstücken auf einer Unterlage in einer vorbestimmten räumlichen Anordnung zur Ausbildung eines Stapels nach Anspruch 1 sowie ein entsprechendes Verfahren nach Anspruch 7 und die Verwendung solcher Vorrichtung zur Durchführung solches Verfahrens, nach Anspruch 8.

Das automatische Bestapeln einer Unterlage oder eines Trägers, insbesondere einer Palette oder eines Rollwagens, mit Packstücken zum Ausbilden eines Stapels zum späteren Versand, also das "Palettieren" ist an sich bekannt. Hierbei werden jedoch Packstücke mit uniformer Größe bzw. Ausmaß durch Roboter, Greifer etc. auf rechnerisch bestimmte Plätze abgelegt.

Bei dem Prozess des automatischen Beladens eines Ladungsträgers mit Packstücken unterschiedlicher Ausprägung zum Ausbilden eines Stapels handelt es sich dagegen um das sogenannte automatische "mixed-case" Palettieren.

In der heutigen Distributionslogistik werden immer größere Anforderungen an die Kommissionierung gestellt. Es ist daher notwendig Kommissioniersysteme zu entwickeln, die automatisch ohne manuelles Einwirken Aufträge abarbeiten.

Tausende von verschiedenen Produkten (bzw. Packstücke) unterschiedlichster Ausprägung (Größe, Form, Gewicht, Abmessungen, Oberflächen, Festigkeit etc.) müssen mit solchen Systemen automatisch kommissioniert werden.

Hierbei müssen unterschiedliche Aspekte berücksichtigt werden, die die Komplexität gegenüber dem "einfachen" manuellen Stapeln einfacher regelmäßiger Geometrien enorm erhöhen. So kann ein nachfolgendes Packstück nur gut auf ein vorheriges Packstück gestapelt bzw. abgelegt werden, wenn diese eine flache bzw. ebene Oberfläche aufweiset, die zudem etwa waagerecht ausgerichtet sein sollte, und wenn das Packstück das Gewicht der auf ihm abgelegten weiteren Packstücke ohne Beschädigung tragen kann.

Ferner sollte der gebildete Stapel eine gewisse Stabilität aufweisen, u. a. damit er beim Transport nicht umfällt. Eine Umwicklung mit Folie hilft zwar, kann aber nicht alleine einen fehlerhaft gebildeten Stapel stabilisieren.

Zudem wird abnehmerseitig immer häufiger eine Optimierung der Stapel aufgrund der gewünschten Entladereihenfolge gewünscht.

Das Stapeln unterschiedlicher Packstücke bzw. Waren unterschiedlicher Größe bzw. Ausmaß erfolgt daher meist noch von Hand, da die Anforderungen an die Stabilität des Stapels, die Packungsdichte innerhalb des Stapels und die Reihenfolge der Beladung sowie die dabei bedingte Entladungsreihefolge und nicht zuletzt die Stapelbarkeit der Waren extrem hoch sind und bisher nicht auch nur teilweise von den bekannten Verfahren und Vorrichtungen erfüllt werden.

Aus der EP 1 462 394 B1 ist eine gattungsgemäß Vorrichtung zum automatischen Beladen eines Ladungsträgers mit einem Ladestapel bildenden Packeinheiten, also eine Vorrichtung zum Palettieren bekannt. Bei der Vorrichtung werden die Packeinheiten auf Tablaren lagernd und vereinzelt zugeführt und von diesen auf einen Packtisch abgelegt. Dort wird die Packeinheit auf dem Tisch liegend von einem Pusher entlang der Breitseite der zu beladenden Palette verschoben, bis die Beladungskoordinaten in X-Richtung erreicht sind. Anschließend schieben ein weiterer Pusher und eine Beladezunge simultan die Packeinheit in Richtung der Ladetiefe über die Palette bis die Beladungskoordinaten in Z-Richtung erreicht sind. Anschließend fährt die Beladezunge zurück, wobei der Pusher stehen bleibt und als Abstreifer dient, so dass die Packeinheit auf der Palette an der gewünschten Stelle "frei fallend" abgesetzt wird. Dabei wird der sich bildende Stapel von einer Beladehilfe an den übrigen drei Seiten gestützt. Es wird also quasi "gegen die Wand" gestapelt. Das Verschieben auf dem Packtisch ist allerdings zeitaufwendig und hat aufgrund der eingeschränkten Zugänglichkeit Nachteile bei der Bildung der Packmuster. Zudem ist zwingend, dass die Beladezunge und der Abstreifer/Pusher simultan in X-Richtung verfahren. Auch kann immer nur eine Packeinheit sequentiell "bearbeitet" werden.

Aus der WO 2010/059923 A1 ist eine automatische Robotor-gestützte Vorrichtung zum Stapeln bekannt, bei der eine Zwischenplatte für das Ausbilden der ersten Lage eines Stapels und gleichzeitigem Paletten-Wechsel verwendet wird.

Vermehrt wird die Bereitstellung der gestapelten Packstücke in sogenannten Rollwagen oder Rollcontainer gefordert. Diese können leicht in Lastwagen geladen und Vorort entladen und bewegt werden, da sie Rollen aufweisen. Zudem besitzen sie Seitenwände, die eine stabile Bestapelung und gute Stabilisierung durch Stretchfolie erlauben, so dass der Transport ebenfalls sicher ist. Allerdings bringen diese Eigenschaften Schwierigkeiten beim automatischen Bestapeln mit sich.

Demgegenüber besteht die Aufgabe der vorliegenden Erfindung ein Verfahren und eine Vorrichtung zum automatischen Stapeln von Packstücken auf einer Unterlage (Rollwagen) in einer vorbestimmten räumlichen Anordnung zur Ausbildung eines Stapels bereitzustellen, das bzw. die auf flexible Weise eine mixed-case Bestapelung mit hohem Durchsatz erlaubt.

Diese Aufgabe wird durch die Vorrichtung des Anspruchs 1, das Verfahren des Anspruchs 7 oder die Verwendung des Anspruchs 8 gelöst. Vorteilhafte Ausgestaltungen ergeben sich aus den Unteransprüchen und der Beschreibung.

Erfindungsgemäß ist erkannt worden, dass eine automatische Bestapelung zuverlässig möglich ist, wenn die Seitenwände des Rollwagens durch eine Aufspreizeinrichtung zumindest senkrecht oder sogar leicht schräg nach Außen aufgebogen gehalten werden. Die Seitenwände haben nämlich die Eigenschaft, sich nach Innen aufeinander zu zu bewegen.

Die Aufspreizeinrichtung besteht aus zwei auf gleicher Höhe im Bereich der erwarteten Seitenwände des Rollwagens angeordneter von der Seitenwand nach vorne in den Rollwagenraum vorstehender Zapfen, die vorzugsweise seitlich nach Außen zum Aufspreizen verlagerbar sind. Vorzugsweise sind die Zapfen dazu jeweils auf einer vertikal ausgerichteten Drehscheibe in der hinteren Seitenwand angeordnet.

Zum einfachen Transport und Handhabung innerhalb des Systems werden die Rollwagen auf Transportpaletten bewegt, die sich wie normale Paletten handhaben lassen.

Weiter hat sich herausgestellt, dass die Bestapelung von Rollwagen erleichtert werden kann, wenn hierfür eine gesonderte und ggf. höhenverstellbare Zwischenplatte vorgesehen ist, die auf der dem Positionierförderer abgewandten Seite des Stapelplatzes bzw. des Trägers angeordnet ist bzw. von dieser Seite in den Rollwagen einführbar ist.

Wenn kein einzelner Pusher wie im Stand der Technik verwendet wird, sondern der Pusher als Anordnung einer Mehrzahl horizontal und längs der Seite des Stapelplatzes angeordneter Einzelpusher ausgebildet ist, also als Batterie ausgebildet ist, die das Abschieben der Packstücke von dem Positionierförderer in Richtung auf den Stapel vornehmen, wobei die Einzelpusher unabhängig von der mindestens einen Schiebeplatte in Z-Richtung verfahrbar sind, um das Packstück beim Zurückziehen der Schiebeplatte zurückzuhalten, können die Packstücke noch variabler positioniert werden und zudem mehrere Packstücke mit weniger Zeitversatz oder sogar gleichzeitig gestapelt werden.

In einer besonders bevorzugten Variante weisen nicht alle Einzelpusher einen eigenen Antrieb auf, sondern haben mindestens einen, vorzugsweise zwei gemeinsame Antriebe, der/die wahlweise mit einem bestimmten Einzelpusher zu dessen Antrieb kuppelbar sind. Dazu kann der Antrieb verfahrbar sein und über ein Kupplungselement in Eingriff mit einem Antriebsschlitten des bzw. der jeweiligen (benachbarten) Einzelpushers gelangen.

Die Einzelpusher sind also an einem Gestell aufgehangen, an dem sie in Z-Richtung auf den Stapel zu (oder weg) beweglich sind. Sie werden dazu von einem quer dazu, also in X-Richtung, verlaufenden oberhalb angeordneten Schlitten oder Traverse, der den Antrieb trägt, angefahren, wobei ein Kupplungs- oder Mitnehmerelement dabei die Wirkverbindung zwischen Antrieb und Einzelpusher herstellt. Das Mitnehmerelement hängt dabei blatt- oder streifenförmig von dem Antrieb bzw. dessen Verfahrtraverse nach unten und greift in eine nach oben offene Nut am Antriebsschlitten des bzw. der benachbarten Einzelpusher ein, wozu der Mitnehmer eine entsprechende Breite aufweist.

Vorzugsweise sind zwei solche verfahrbare Gemeinschaftsantriebe vorgesehen, einer von jeder Seite in X-Richtung des Gestells bzw. Stromaufwärts und Stromabwärts in X-Richtung zum Stapelplatz her kommend bzw. positioniert.

Die Anordnung der Einzelpusher kann sich über die gesamte Länge des Positionierförderers erstrecken, dann können die Einzelpusher in X-Richtung bzw. Förderrichtung des Positionierförderers unbeweglich ausgestaltet werden. Alternativ ist es auch denkbar, entsprechend weniger Einzelpusher, aber mindestens zwei, vorzusehen und diese dann zum Ausgleich in X-Richtung verstellbar auszugestalten.

In einer bevorzugten Ausführungsform ist die mindestens eine Schiebeplatte als horizontal und längs der Seite des Stapelplatzes und quer dazu beweglich ausgebildete flache streifenförmige Platte ausgebildet, die in Richtung des Stapelplatzes dünner zuläuft. Die Schiebeplatte ist auf der dem Träger gegenüberliegenden Seite des Positionierförderers aufgehängt. Sie ist dort ggf. am selben Gestell wie die Einzelpusher befestigt. Sind mehr als eine Schiebeplatte vorhanden, können diese parallel und nebeneinander angeordnet werden.

Bevorzugt ist es, wenn die mindestens eine Schiebeplatte jeweils auf einer in Z-Richtung ausgerichteten Linearachse schlittenartig vor- und zurück beweglich ist. Somit kann sie auf einfache Weise in die benötigte Z-Richtung zum Stapel hin ausgefahren bzw. zurückgefahren werden und ist trotzdem steif genug durch die lange Auflagefläche bzw. Anzahl der Auflagepunkte. Der Antrieb kann z.B. über einen Zahnriemen, eine Zahnstange usw. erfolgen.

Es versteht sich, dass die Schiebeplatte je nach Ausgestaltung des Positionierförderers unter diesen oder durch diesen hindurch greift, um ein Packstück auf der anderen Seite im Stapel zu positionieren.

Auch ist es möglich, die mindestens eine Schiebeplatte in Längsrichtung (X-Richtung) des Positionierförderers beweglich auszugestalten, insbesondere dann, wenn nur eine oder wenige, vorzugsweise zwei Schiebeplatten vorgesehen sind. Dann können diese gemeinsam oder unabhängig voneinander beweglich sein. Wenn sie voneinander unabhängig beweglich sind, können mehrere Packstücke gleichzeitig auf die Unterlage bzw. in den Stapel verlagert werden.

Alternativ können entsprechend der Anzahl der Einzelpusher auch entsprechend viele Schiebeplatten gleichmäßig über die Länge des Positionierförderers verteilt sein. Dann ist eine Verstellbarkeit in X-Richtung nicht notwendig. Jede Schiebeplatte ist dann bevorzugt einem Einzelpusher "zugeordnet" und mit dem Einzelpusher in einer vertikalen Ebene angeordnet, d.h. von oben besehen übereinander fluchtend angeordnet. Die Schiebeplatten können analog der Einzelpusher (siehe oben) ebenfalls mit gemeinsamen Antrieben ausgestaltet sein.

Es ist ebenfalls möglich, ausgewählte Einzelpusher gemeinsam anzusteuern, so dass z.B. zwei bis vier benachbarte Einzelpusher gleichzeitig gemeinsam ein größeres Packstück bewegen. Entsprechend können auch die Schiebeplatten gemeinsam angesteuert werden.

Um eine konstruktiv einfache und nicht behindernde Aufhängung bereitzustellen, ist es sinnvoll, wenn die Anordnung der Einzelpusher an einem sich oberhalb des Positionier-Förderers erstreckenden Gestell befestigt ist. Das Gestell ruht dabei vorzugsweise auf schienenartigen Profilen und dient auch als eine Auflage oder Aufhängung für die Schiebeplatten. Somit bildet das Gestell zusammen mit der Anordnung der Einzelpusher und der Schiebeplatten eine modulare Pusher-Schiebeplatten-Einheit aus.

Bei automatischen Anlagen und Vorgängen von hoher Komplexität wie die vorliegende kommt es trotz aller Planungen zu Störungen, z.B. weil ein Packstück beim Stapeln umfällt. Dann ist ein manueller Eingriff durch eine Bedienperson notwendig. Um deren Eingreifen zu ermöglichen bzw. erleichtern, ist in einer Ausführungsform daher vorgesehen, dass Gestell mit der Einheit aus Pusher und Schiebeplatten gemeinsam von dem Stapelplatz weg beweglich ist, was manuell oder angetrieben erfolgen kann. Vorzugsweise ist die Einheit dazu schienenartig verschiebbar, insbesondere über einen Antrieb. Vorzugsweise ist der Antrieb eine Spindel, die manuell oder Motor getrieben ist. Sinnvoll ist es ebenfalls, wenn der Positionierförderer am Gestell befestigt ist, so dass dieser ebenfalls "entfernbar" ist. Diese Möglichkeit der manuellen Störbeseitigung bzw. Beladung erhöht die Verfügbarkeit der Vorrichtung.

Für die Ausgestaltung des Positionierförderers sind erfindungsgemäß zwei Alternativen vorgesehen. Es versteht sich jedoch, dass jegliche Ausgestaltung, die die Einnahme der X-Position der Packstücke erlaubt, einsetzbar ist.

Wenn der Positionierförderer als Endlos-Förderer ausgebildet ist, ist es möglich, einerseits eine hohe Leistung durch den Endlos-Förderer zu erzielen und andererseits die Packstücke sicher handzuhaben. Dabei können mehrere Packstücke gleichzeitig transportiert und verlagert werden. Zudem sind der Aufbau und die Steuerung einfach.

Als Endlos-Förderer wird vorliegend ein Förderer verstanden, bei dem ein Endlosband umläuft und eine einheitliche Oberfläche ausbildet. Als Endlos-Förderer im Sinne der Erfindung kommen Bandförderer, Gurtförderer, Tragkettenförderer, Gliederbandförderer, Plattenbandförderer in Betracht.

Vorzugsweise greift dann die mindestens eine Schiebeplatte zwischen dem Obertrum, also dem oberen Abschnitt auf dem gefördert wird, und Untertrum, also dem unteren Abschnitt der zurückläuft, des Endlos-Förderers hindurch, so dass sich eine besonders kompakte Bauweise ergibt.

Wenn oberhalb des endlos Förderers ein in X-Richtung, optional auch in Z-Richtung, beweglicher Anschlag für die auf dem Endlos-Förderer angeordneten Packstücke zur Feinpositionierung der Position in X-Richtung angeordnet ist, können die Packstücke besonders einfach und genau positioniert werden. Je nach Ausgestaltung der Oberfläche des Endlos-Förderers muss dieser dabei noch nicht einmal angehalten werden, sondern kann weiterlaufen, während die Packstücke auf dessen Oberfläche "gleiten".

Ebenfalls möglich ist die Verwendung von Anschlaglamellen auf dem Endlos-Förderer, insbesondere auf der Oberseite des Obertrums, zum genauen Positionieren der Packstücke. Der Positionierförderer könnte dann ggf. reversierend betrieben werden, damit die Anschlaglamellen nicht umlaufen müssen. Wenn genügend Platz vorgesehen ist, könnten die Anschlaglamellen auch umlaufen.

Alternativ kann der Positionierförderer als Verfahrwagen oder Shuttle ausgebildet werden, der auf in X-Richtung längs des Stapelplatzes bzw. der Unterlage dafür angeordneten Schienen hin- und her fahrbar ist und jeweils ein Packstück an die vorgesehene X-Position transportiert.

Vorzugsweise ist der Verfahrwagen mit einem C-förmigen Gestell ausgebildet, so dass dann die mindestens eine Schiebeplatte zwischen die Schenkel des "C" hindurchgreifen kann, so dass keine gegenseitige Behinderung ergibt. Dies erlaubt es auch, dass der Verfahrwagen nach erfolgter "Übergabe" des Packstücks an die Schiebeplatte vor Beendigung des Stapelvorgangs bereits zurück zur Übernahme des nächsten Packstücks vom Zuführförderer fährt. Die eigentliche Trägerfläche für das Packstück ist also nur an einer Seite an dem Fahrgestell des Verfahrwagens befestigt und kragt von dort aus.

Damit die Packstücke nicht vom Verfahrwagen herunterfallen und genau positioniert werden, weist dieser auf der in X-Richtung dem Zuführförderer abgewandten Seite einen Anschlag auf. In einer besonders bevorzugten Ausführungsform ist der Anschlag aus der Anschlagstellung weg bewegbar, vorzugsweise abklappbar bzw. verschwenkbar, so dass der Verfahrwagen nach erfolgter "Übergabe" des Packstücks an die Schiebeplatte (vgl. oben) bereits das nächste Packstück "holen" kann.

Der Anschlag ist also aus der Anschlagstellung weg bewegbar ausgestaltet. Vorzugsweise ist dazu der Anschlag um eine Achse aus der Anschlagstellung in eine Freigabestellung schwenkbar. Diese Ausführung benötigt wenig Platz und "kollidiert" auch nicht mit den Schiebeplatten. Sinnvoll ist es, wenn der Anschlag zwei gegenläufig verschwenkbare Anschlagflügel aufweist, um einen breiten Anschlag bzw. Fläche bereitzustellen.

Zwischen dem Zuführförderer und dem Positionierförderer kann ein Umsetzer für die Packstücke angeordnet sein. Dieser kann als Pusher ausgestaltet sein. Dabei ist es möglich, dass der Pusher gemeinsam mit dem Verfahrwagen das Packstück an die gewünschte X-Position transportiert, so dass das Packstück quasi zwischen Pusher und seitlichem Anschlag des Verfahrwagens "eingeklemmt" transportiert wird. Somit sind hohe Beschleunigungen und Geschwindigkeiten bei der Positionierung ohne eine Gefahr des Verschiebens, Herabfallens usw. möglich.

Somit ist in einer Variante der Pusher (Umsetzer) an einer sich längs des Trägers erstreckenden und parallel zum Positionierförderer verlaufenden Schiene beweglich aufgehangen und angetrieben.

Es ist jedoch auch denkbar, dass der Zuführförderer die Packstücke direkt auf den Positionierförderer aufbringt ohne Zwischenschaltung eines Umsetzers. In einer Variante endet der Zuführförderer dazu senkrecht zum Positionierförderer und "schiebt" die Packstücke direkt auf den Positionierförderer auf.

Insgesamt ist es so möglich, die Bestapelung des Trägers flexibel und mit hoher Leistung durchzuführen. Insbesondere kann ein breites Spektrum an unterschiedlichen Packstücken kontinuierlich gestapelt werden. Es können also neben den selbstverständlich ebenfalls handhabbaren gleichförmigen wenig anspruchsvollen Packstücken Packstücke mit unterschiedlichsten Abmessungen nacheinander auf den Träger gestapelt werden.

Als Packstücke kommen unterschiedlichste Waren, verpackte Waren, in Gruppen verpackte Waren, wie Kartons, Kisten, Kästen, Behälter, Waren auf Tablaren, Packeinheiten, wie z.B. Folien-Merfachverpackungen von Kunststofflaschen etc., als auch einzelne Artikel aller Art in Frage.

Unter Zuführförderer werden Förderer im Allgemeinen und insbesondere Rollenförderer, Förderbänder und Fördersysteme verstanden. Diese können manuell oder automatisch beschickt werden. Die Packstücke werden vereinzelt und in der richtigen Reihenfolge für die gewünschte Packsequenz auf der Fördertechnik angedient. Die richtige Reihenfolge wird rechnerisch bei der Abarbeitung eines Auftrags ermittelt. Entsprechende Software dazu ist bekannt. Die Besonderheit liegt darin, dass die Packstücke auf dem Zuführförderer ohne Hilfsmittel, wie Tablaren, Behälter etc, angedient werden.

Die Packstücke werden also vereinzelt angeliefert. Es ist jedoch auch möglich, Gruppen von identischen oder sehr ähnlichen verpackten oder unverpackten Packstücken zur gemeinsamen Handhabung zu gruppieren. Diese Gruppierung erfolgt dann entweder im Bereich der Übernahme der Packstücke von dem Zuführförderer durch die Verlagerungsmittel oder bereits beim Beschicken des Zuführförderers. Aufgrund der besonderen Ausgestaltung des Pushers als Batterie können gerade solche Packstücke gemeinsam verlagert bzw. positioniert werden.

Günstig ist es auch, wenn die Packstücke vor der Übernahme durch die Verlagerungsmittel ausgerichtet werden. Dies erlaubt eine standardisierte und somit vereinfachte Übernahme der Packstücke durch die Verlagerungsmittel. Alternativ oder zusätzlich können auch entsprechende optische Verfahren zur Erkennung der Ausrichtung der Packstücke und Steuerung der Verlagerungsmittel verwendet werden, um mit diesen die Ausrichtung zu erreichen. Die Ausrichtung kann z.B. durch den Umsetzer erfolgen. Auch der bewegliche Anschlag kann zum Ausrichten verwendet werden.

Sinnvoll ist es, wenn der Stapel auf der Unterlage beim und/oder nach dem Stapeln stabilisiert wird. Somit behalten die einzelnen Schichten ihren Aufbau und die bestapelte Unterlage lässt sich sicherer transportieren.

Zum Stabilisieren nach dem Stapeln (vollständig oder einzelner Schichten) kann der Stapel zusammen mit dem bestapelten Rollwagen durch Umwickeln mit einer Folie, Netz oder dergleichen stabilisiert werden. Das Umwickeln kann dabei schichtweise nach und nach beim Bestapeln bzw. nach dem Bestapeln einer Schicht erfolgen. Hierbei findet die Stabilisierung innerhalb der eigentlichen Vorrichtung zum Bestapeln statt. Der bereits teilweise bestapelte Rollwagen wird schichtenweise abgesenkt, um das Niveau zum Stapeln anzupassen. Dies wird ausgenutzt, da so bereits gebildete Schichten des Stapels "nach unten rutschen" und unterhalb des Stapelniveaus schichtweiseumwickelt werden können, während "oben" weiter gestapelt wird. Dies erspart Zeit. Hierzu ist eine Folienwickelvorrichtung direkt in die Vorrichtung integriert. Das hat den Vorteil, dass der Rollwagen mit gebildetem Stapel nicht gesondert bewegt werden muss. So kann nach jedem Absenken einer Lage oder Schicht bereits eine Stabilisierung erfolgen. Dies hat zur Folge, dass selbst bei eigentlich nicht völlig stabil bestapelten Rollwagen eine große Stabilität des Stapels erreicht werden kann. Dies erweitert auch die Möglichkeiten der Stapelbildung bezüglich der Waren und der wählbaren Reihenfolge erheblich.

Selbstverständlich können alternativ zur Folienwickeltechnik alle anderen bekannten Möglichkeiten der Stabilisierung verwendet werden. Dazu gehören z.B. Folienschrumpfen, Netze und andere dehnbare Materialien sowie Klett- und Klebeverbindungen usw.

Bei Stapeln selber kann eine Stabilisierung durch seitliche, U-förmig um den Stapelplatz bzw. Rollwagen angeordnete seitliche Wände erfolgen, so dass "gegen die Wand" gestapelt werden kann. Sowohl die Seitenwände als auch die hintere Seitenwand können vertikal und/oder horizontal bzgl. des Stapelplatzes verstellbar bzw. verfahrbar sein. Somit können unterschiedlich große Träger usw. beladen werden und die Wände als Abstreifer im Zusammenhang mit Zwischenplatten dienen.

Je nach zu stapelnden Packstücken kann es zu deren Schutz oder zur Erhöhung der Stapelbarkeit usw. notwendig sein, Lagen, z.B. aus Karton oder Pappe, zwischen, unterhalb oder oberhalb der Schichten einzulegen. Hierzu kann das flächige Material in geeigneter Weise bevorratet und/oder angeliefert sowie mit an den Handhabungsmitteln vorgesehenen Saugern aufgelegt werden.

Sowohl die Rollwagen als auch die Lagen (Pappen) können über eine gesonderte Fördertechnik angeliefert und bereitgestellt werden. Die Übernahme bzw. Übergabe der Träger bzw. Lagen kann mit dedizierter Technik erfolgen.

In einer Ausführungsform ist vorgesehen, dass auf dem Niveau des. Positionierförderers oberhalb des zu beladenden Rollwagens eine Zwischenplatte vorgesehen ist. Die Zwischenplatte stellt eine einheitliche glatte Fläche für die Stapelbildung bereit und erlaubt ein Weiterstapeln trotz Träger- oder Unterlagenwechsel.

Die Zwischenplatte ist vorzugsweise mittig geteilt und jeder Teil zur Seite hin verschiebbar ausgestaltet.

In einer Variante wird die erste Lage eines Stapels auf der Zwischenplatte gebildet, während der komplett beladene Rollwagen des vorherigen Stapelvorgangs darunter gegen eine neue leere Unterlage getauscht wird. Somit kann der Stapelvorgang ohne Unterbrechung fortgesetzt werden. Ist die erste Schicht gebildet und die neue Unterlage anwesend, werden die Teile zur Seite gefahren und die erste Schicht so auf den darunter liegenden Träger überführt, auf dem anschließend weitergestapelt wird. Dies Ausführungsform eignet sich besonders für Paletten usw.

Beim Auseinanderbewegen bzw. Öffnen der Zwischenplatte dienen die seitlichen Stabilisierungs-Wände als Abtreifer, d.h. die Zwischenplatte bewegt sich seitlich unterhalb der unteren Ränder der Wände.

In einer bevorzugten Alternative findet der komplette Stapelvorgang auf der Zwischenplatte statt und diese ist dazu höhenveränderlich ausgebildet. Dies hat den Vorteil, dass die Übergabe an den Rollwagen erst nach der Bestapelung stattfindet und dieser nicht "getauscht" werden muss. Dadurch wird der Gesamtdurchsatz der Vorrichtung erhöht. Zudem ist so die ggf. vorgesehene Umwicklung mit Stretchfolie einfacher Auszuführen.

Als Abstreifer beim Übergeben des fertig gestapelten Stapels an den Rollwagen durch Zurückziehen der weiteren Zwischenplatte kann die hintere Seitenwand dienen. In einer Ausgestaltungsform ist die hintere Seitenwand zudem Höhenverfahrbar und/oder in Richtung des Positionierförderers beweglich, so dass unterschiedlich große Rollwagen verwendbar sind.

Diese dient vorzugsweise auch als Anbringungsort für die Aufspreizeinrichtung.

Somit können mit der erfindungsgemäßen Vorrichtung je nach Belieben abwechselnd Paletten etc. oder Rollwagen bestapelt werden.

Weitere Details der Erfindung ergeben sich aus der nachfolgenden Beschreibung von Ausführungsbeispielen anhand der Zeichnung, in der
- Fig. 1: eine schematische perspektivische Ansicht auf eine Vorrichtung zum automatischen mehrlagigen Bestapeln beim Beginn der Bildung der ersten Schicht auf einer Palette zeigt;
- Fig. 2: eine vergrößerte schematische Seitenansicht auf die Vorrichtung aus Fig. 1 im Bereich des Endlos-Förderers zeigt;
- Fig. 3: eine Figur 2 entsprechende Ansicht aus einem anderen Blickwinkel;
- Fig. 4: eine Figur 2 entsprechende Ansicht aus einem nochmals anderen Blickwinkel;
- Fig. 5: eine Figur 2 entsprechende Ansicht von oben;
- Fig. 6: eine Figur 2 entsprechende Ansicht nach der Fertigstellung der ersten Schicht;
- Fig. 7: eine Figur 1 entsprechende Ansicht nach der Fertigstellung weiterer Schichten;
- Fig. 8A: eine schematische perspektivische Ansicht auf eine Variante einer Vorrichtung zum automatischen mehrlagigen Bestapeln;
- Fig. 8B: eine vergrößerte Detailansicht des gemeinsamen Antriebs der Einzelpusher;
- Fig. 9: eine schematische perspektivische Ansicht von einer Seite auf eine weitere Vorrichtung zum automatischen mehrlagigen Bestapeln;
- Fig. 10: eine schematische perspektivische Ansicht auf die Vorrichtung aus Figur 9 aus einem anderen Blickwinkel;
- Fig. 11: eine schematische perspektivische Ansicht auf die Verlagerungsmittel der Vorrichtung aus Figur 9 beim Übernehmen eines Packstücks;
- Fig. 12: eine schematische perspektivische Ansicht auf die Verlagerungsmittel der Vorrichtung aus Figur 9 beim Transportieren des Packstücks in X-Richtung;
- Fig. 13: eine schematische perspektivische Ansicht auf die Verlagerungsmittel der Vorrichtung aus Figur 9 beim beginnenden Transportieren des Packstücks in Z-Richtung;
- Fig. 14: eine schematische perspektivische Ansicht auf die Verlagerungsmittel der Vorrichtung aus Figur 9 beim beginnenden Transportieren des Packstücks in Z-Richtung aus einem anderen Blickwinkel;
- Fig. 15: eine schematische perspektivische Ansicht auf die Verlagerungsmittel der Vorrichtung aus Figur 9 beim weiteren Transportieren des Packstücks in Z-Richtung;
- Fig. 16: eine schematische perspektivische Ansicht auf die Verlagerungsmittel der Vorrichtung aus Figur 9 beim Beenden des Transportierens des Packstücks in Z-Richtung;
- Fig. 17: eine schematische perspektivische Ansicht auf die Verlagerungsmittel der Vorrichtung aus Figur 9 nach dem Beenden des Transportierens des Packstücks in Z-Richtung;
- Fig. 18: eine vergrößerte Detailansicht des Verfahrwagens aus den Figuren 11 bis 17;
- Fig. 19: eine schematische perspektivische und vergrößerte Ansicht auf die Vorrichtung aus Figur 9 im Bereich des Stapelplatzes beim Beenden des Stapelvorgangs;
- Fig. 20: eine schematische perspektivische und vergrößerte Ansicht auf die Vorrichtung aus Figur 19 im Bereich des Stapelplatzes bei der Übergabe des Stapels von der Zwischenplatte auf eine Palette;
- Fig. 21: eine schematische perspektivische und vergrößerte Ansicht auf die Vorrichtung aus Figur 19 im Bereich des Stapelplatzes beim Absenken des Stapels;
- Fig. 22: eine schematische perspektivische und vergrößerte Ansicht auf die Vorrichtung aus Figur 19 im Bereich des Stapelplatzes beim Umwickeln des Stapels mit Folie und Abtransport;
- Fig. 23: eine schematische perspektivische Ansicht auf eine Vorrichtung zum automatischen mehrlagigen Bestapeln im Bereich des Stapelplatzes beim Bestapeln von Rollwagen;
- Fig. 24: eine schematische perspektivische Ansicht auf die Vorrichtung aus Figur 23 an einem anderen Blickwinkel, wobei die hintere Stabilisierungswand zur besseren Ansicht weggelassen ist;
- Fig. 25: eine vergrößerte Ansicht auf die Vorrichtung aus Figur 23 beim Aufspreizen der Rollwagenseitenwände und
- Fig. 26: eine Detailansicht des Mechanismus zum Aufspreizen der Rollwagenseitenwände.

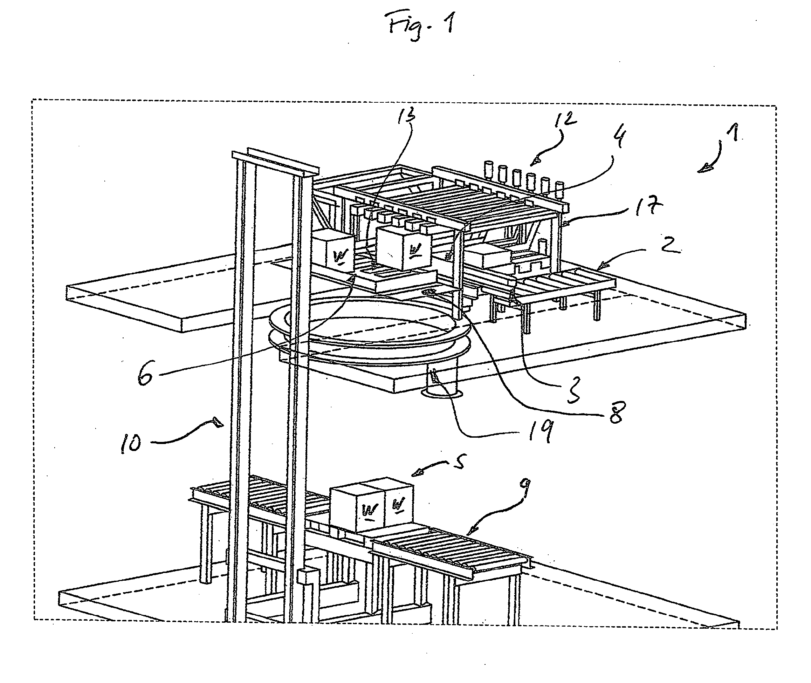

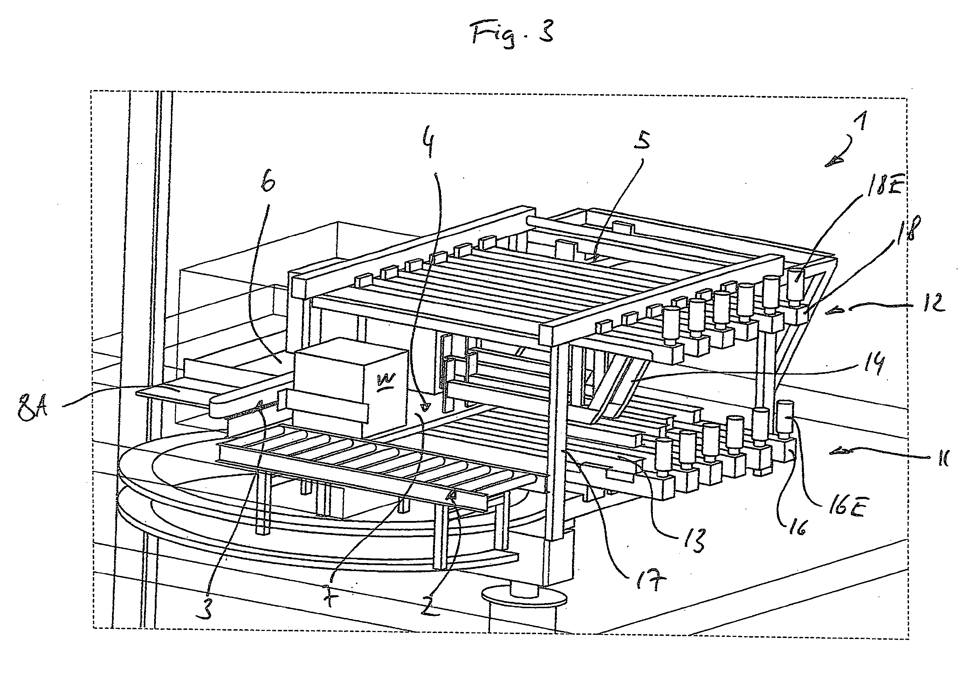

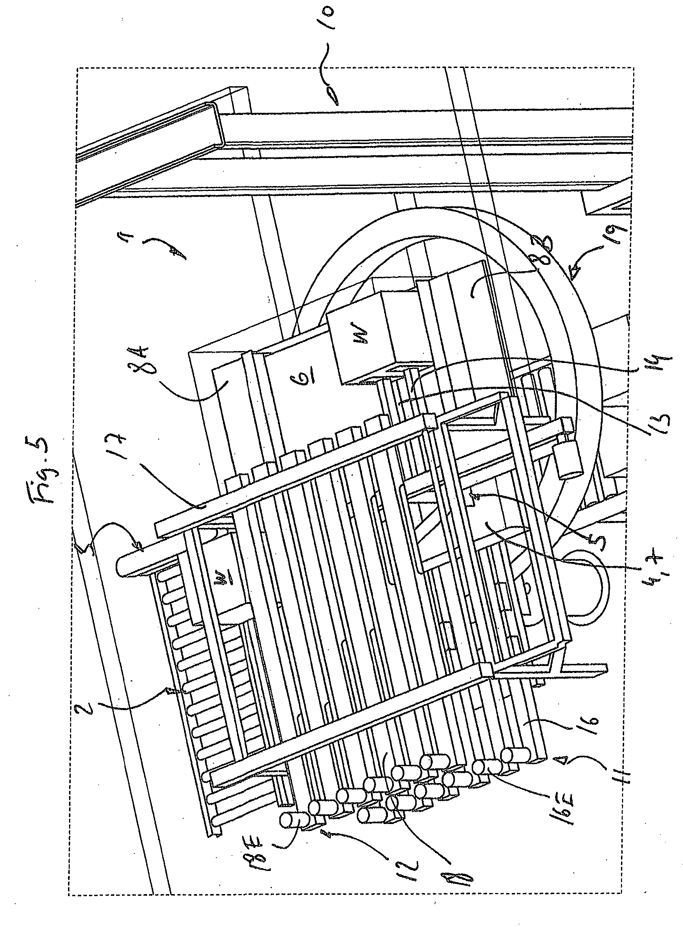

In den Figuren 1 - 7 ist eine als Ganzes mit 1 bezeichnete Vorrichtung zum automatischen mehrlagigen Bestapeln von Paletten P oder Rollwagen R mit Packstücken W unterschiedlichen Ausmaßes in einer vorbestimmten räumlichen Anordnung gezeigt. In den Figuren ist zunächst die Variante mit Paletten P beschrieben.

Es handelt sich also um eine Vorrichtung zum "mixed-case Palettieren". Natürlich können mit der Vorrichtung 1 auch lediglich gleichartige Packstücke W palettiert werden.

Die Vorrichtung 1 umfasst einen Rollenförderer 2 als Zuführförderer, der die vereinzelten Packstücke W in einer rechnergestützten vorbestimmten Reihenfolge aus einem nicht gezeigten Lager bereitstellt.

Am Ende des Rollenförderers 2 ist ein als Pusher 3 ausgebildeter Umsetzer angeordnet, der die Packstücke W um 90 Grad umsetzt und auf den nachfolgenden Positionierförderer abgibt. Dabei werden die Packstücke W ebenfalls winklig ausgerichtet, so dass sie soweit aufgrund ihrer äußeren Form möglich, auf dem Positionierförderer 4 ausgerichtet sind.

Der Positionierförderer 4 ist als Endlos-Förderer in Gestalt eines umlaufenden Förderbands ausgebildet. Durch Ihn werden die Packstücke W in X-Richtung fördernd positioniert, um diese Koordinate der späteren Position im Stapel einzunehmen.

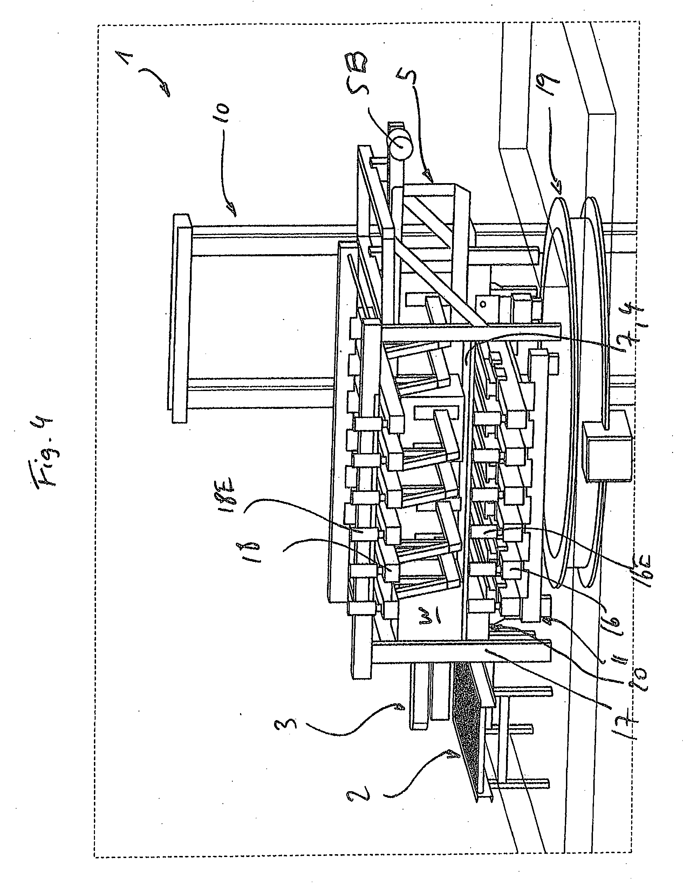

Um die Positionierung genau einzuhalten bzw. bei laufendem Förderband 4 durchzuführen, ist ein Stopper 5 (vgl. Figur 4) vorgesehen, der in X-Richtung relativ zum Förderband beweglich angesteuert wird, um das jeweilige Packstück "anzuhalten". Der Antrieb erfolgt über einen Zahnriemen (nicht gezeigt), der an der Linearachse 5B angeordnet ist und in den der Stopper 5 eingehängt ist.

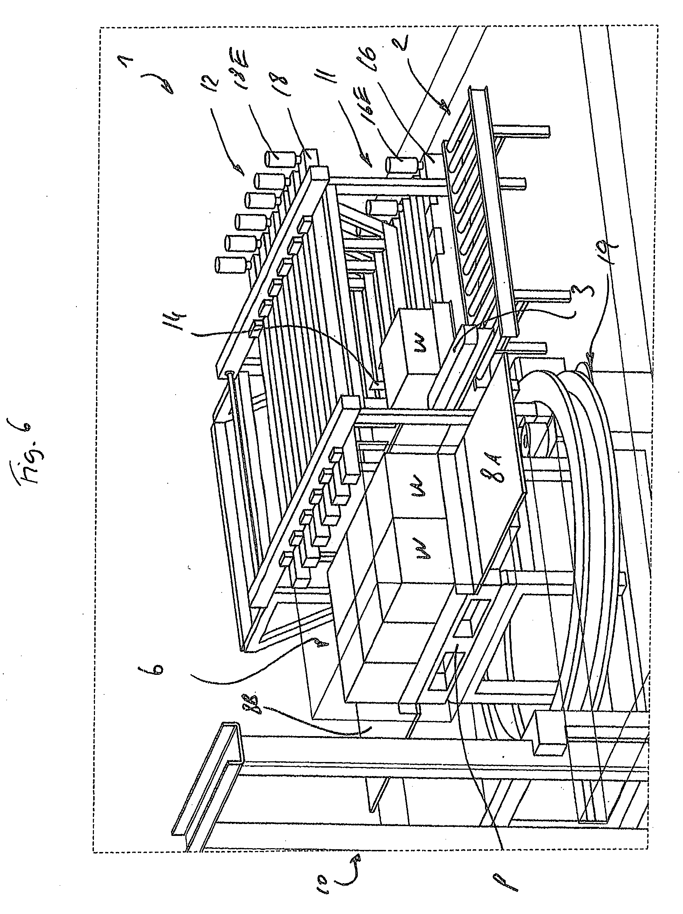

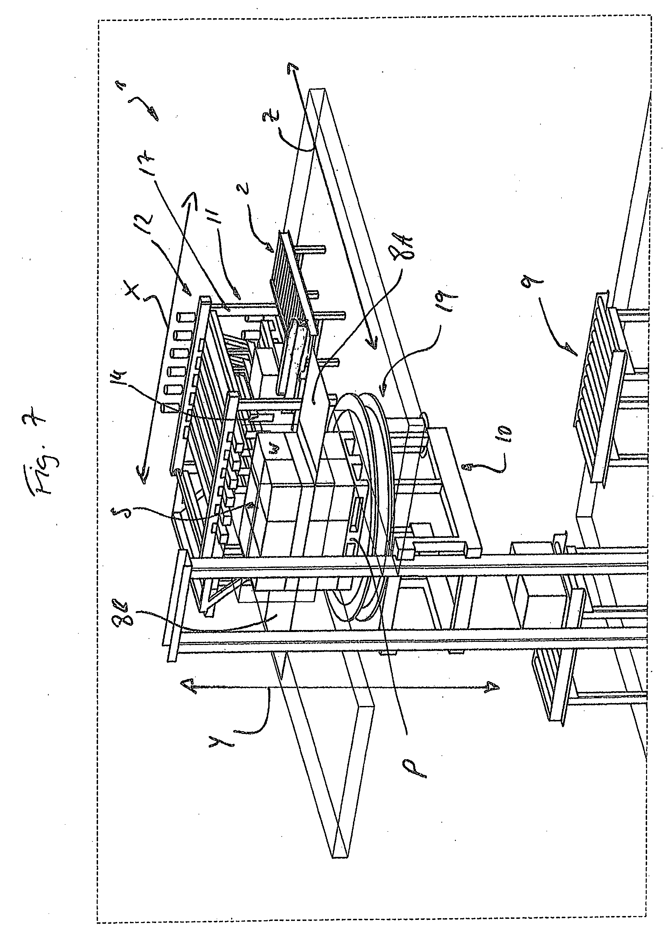

Der Positionierförderer bzw. das Förderband 4 ist horizontal (auf selben Niveau) und längs einer Seite des Platzes 6 für die Stapelbildung angeordnet. Üblicherweise wird hier der zu beladende Träger P (Palette) angeordnet sein (vgl. Figuren 6 und 7).

Allerdings ist, wie noch ersichtlich werden wird, dies nicht der Fall bei der Bildung der ersten Schicht eines Stapels.

Auf dem Niveau des Obertrums 7 des Endlos-Förderers 4 oberhalb des zu beladenden Trägers P ist eine Zwischenplatte 8 in dem Platz 6 vorgesehen. Die Zwischenplatte 8 ist derart mittig geteilt und jeder Teil 8A, B zur Seite hin (in X-Richtung) verschiebbar ausgestaltet, dass die erste Lage eines Stapels auf der Zwischenplatte 8 gebildet wird, während der komplett beladene Träger P des vorherigen Stapelvorgangs darunter gegen einen neuen leeren Träger P getauscht wird. Somit kann der Stapelvorgang ohne Unterbrechung fortgesetzt werden. Ist die erste Schicht gebildet und der neue Träger P anwesend, werden die Teile 8A, B zur Seite gefahren (vgl. Figur 6) und die erste Schicht so auf den darunter liegenden Träger P überführt, auf dem anschließend weitergestapelt wird (vgl. Figur 7).

Zum Zuführen leerer Paletten bzw. Abführen bestapelter Paletten ist ein entsprechender Rollenförderer 9 unterhalb des Stapelplatzes 6 vorgesehen.

Von dem Rollenförderer wird die jeweilige Palette P von einer Hub- und Senkeinheit 10 zum Heben und Senken des Trägers P in Y-Richtung übernommen und nach oben zum Stapelplatz 6 gefahren. Die Hub- und Senkeinheit 10 ist auch für die Niveauanpassung beim Stapeln an sich zuständig, führt also falls nötig beim Stapeln eines Packstücks W einen Hub oder eine Absenkung aus und führt auch die Anpassung des Ausgleichs der Schichten beim Beginn einer neuen Schicht aus.

Von dem Förderband 4 wird das jeweilige Packstück W also auf die gewünschte Position in dem Stapel seitlich in den Platz 6 auf die Zwischenplatte 8 (erste Schicht) bzw. die Palette P (weitere Schichten) in Z-Richtung abgeschoben.

Für diese Verlagerung der Packstücke W an die vorherbestimmte Position im Stapel S umfasst die Vorrichtung eine Schiebeplatten-Batterie 11 und eine Pusher-Batterie 12, also jeweils eine Mehrzahl von nebeneinander horizontal und längs der Seite des Stapelplatzes 6 bzw. der Palette P angeordnete einzelne Schiebeplatten 13 und einzelne Pusher 14.

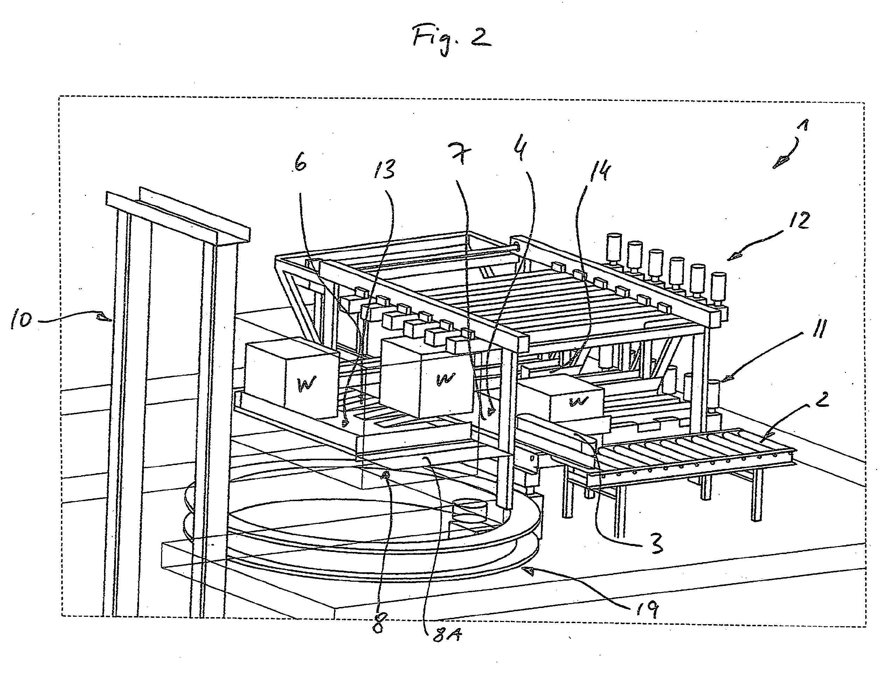

Die Schiebeplatten 13 greifen zwischen dem Obertrum 7 und dem Untertrum 20 des Endlos-Förderers hindurch und übernehmen das durch den Pusher 14 vom Förderband abgeschobene Packstück W. Anschließend fahren der Pusher und die Schiebeplatte gemeinsam an die gewünschte Position und die Schiebeplatte 13 wird zurückgezogen, während der Pusher 14 zum Zurückhalten des Packstücks W stehen bleibt. Somit wird das Packstück W positioniert. Die Schiebeplatten 13 laufen vorne flach zu (vgl. Figur 2), so dass die Positionierung möglichst genau erfolgen kann.

Die Schiebeplatten 13 sind jeweils als horizontal und längs der Seite des Stapelplatzes 6 und quer dazu beweglich ausgebildete flache streifenförmige Platte ausgebildet, die in Richtung des Stapelplatzes 6 dünner zulaufen.

Die Schiebeplatten 13 sind auf der dem Träger gegenüberliegenden Seite des Endlos-Förderers 4 aufgehängt und parallel und nebeneinander angeordnet. Sie sind jeweils auf einer in Z-Richtung ausgerichteten Linearachse 16 schlittenartig vor- und zurück beweglich. Der Antrieb erfolgt je Achse über einen Elektromotor 16E und einen Zahnriemen (nicht gezeigt), der an der Linearachse angeordnet ist und in den der Schlitten bzw. die Schiebeplatte 13 eingehängt ist.

Die Schiebeplattenbatterie 11 bildet somit quasi eine wahlweise Verbreiterung des Endlos-Förderers 4 in den Stapelplatz 6 hinein aus.

Die Pusher 14 sind horizontal und längs der Seite des Stapelplatzes 6 bzw. des Trägers P entlang des Endlos-Förderers 4 und miteinander fluchtend angeordnete sowie unabhängig voneinander verfahrbar ausgebildet. Sie sind auf der dem Träger gegenüberliegenden Seite des Endlos-Förderers angeordnet bzw. befinden sich dort in Ruhestellung, um über das Förderband 4 zum Abschieben von Packstücken auszufahren.

Die Pusher sind wie die Schiebeplatten auch über die gesamte Länge des Stapelplatzes 6 bzw. der Palette P angeordnet und an einem oberhalb des Endlos-Förderers aufgespanntem Gestell 17 befestigt. Dort sind sie jeweils auf einer Z-Richtung ausgerichteten Linearachse 18 schlittenartig vor- und zurück beweglich. Der Antrieb erfolgt je Achse über einen Elektromotor 18E und über einen Zahnriemen (nicht gezeigt), der an der Linearachse angeordnet ist und in den der Schlitten bzw. die Pusher 14 eingehängt ist.

Sowohl der Stopper 5 als auch die Pusher 14 erstrecken sich von der jeweiligen Linearachse nach unten auf eine Höhe nur knapp oberhalb der Oberfläche des Förderbands 4 und weisen am dortigen Ende einen flächig vergrößerten Fuß auf, um die Packstücke W besser und sicherer handzuhaben.

Unterhalb des Stapelplatzes 6 ist eine Einheit 19 zum Umwickeln des gebildeten Stapels S mit einer Folie vorgesehen.

Das Umwickeln erfolgt schichtweise nach und nach beim Bestapeln bzw. nach dem Bestapeln einer Schicht. Der Träger P mit den bereits gebildeten Schichten des Stapels S wird von der Hub- und Absenkeinheit 10, nach und nach, nach unten abgesenkt und fährt so durch die ringförmig ausgebildete Einheit 19 zum Umwickeln.

Ist der gesamte Stapel S fertig gestellt, wird der Stapel S auf der Palette P nach unten gefahren und über den Rollenförderer 9 abtransportiert.

Gleichzeitig wird die Zwischenplatte 8 geschlossen und auf dieser weitergestapelt zur Ausbildung des nächsten Stapels des nächsten Auftrags.

Parallel hierzu wird wie oben bereits beschrieben eine neue leere Palette P "geladen".

Insgesamt wird also zum automatischen Stapeln von Packstücken W auf eine Palette P in einer vorbestimmten räumlichen Anordnung zur Ausbildung eines Stapels S rechnergestützt die Reihenfolge und räumlichen Position der Packstücke W auf der Palette P zur Errichtung eines Stapels S anhand des zugrunde liegenden Auftrags bestimmt.

Dann werden die Packstücke W in einer dazu benötigten vorbestimmten Reihenfolge mittels des Zuführförderers 2 aus einem Lager etc. vereinzelt ohne Hilfsmittel (Trays etc.) herbeigeschafft. Die zu verladenden Packstücke W werden anschließend von dem Zuführförderer 2 durch den Umsetzer 3 auf den Endlos-Förderer 4 umgesetzt.

Mittels diesem, dem Stopper 5 und der Pusher-Batterie 12 und Schiebeplatten-Batterie 11 wird das jeweilige Packstück W an die vorherbestimmte räumlichen Position auf der Palette P (bzw. dem Stapelplatz 6 oder Zwischenplatte 8) in dem sich bildenden Stapel transportiert.

Je nach Bedarf wird dabei die Palette P in Y-Richtung durch die entsprechende Einheit 10 abgesenkt oder angehoben.

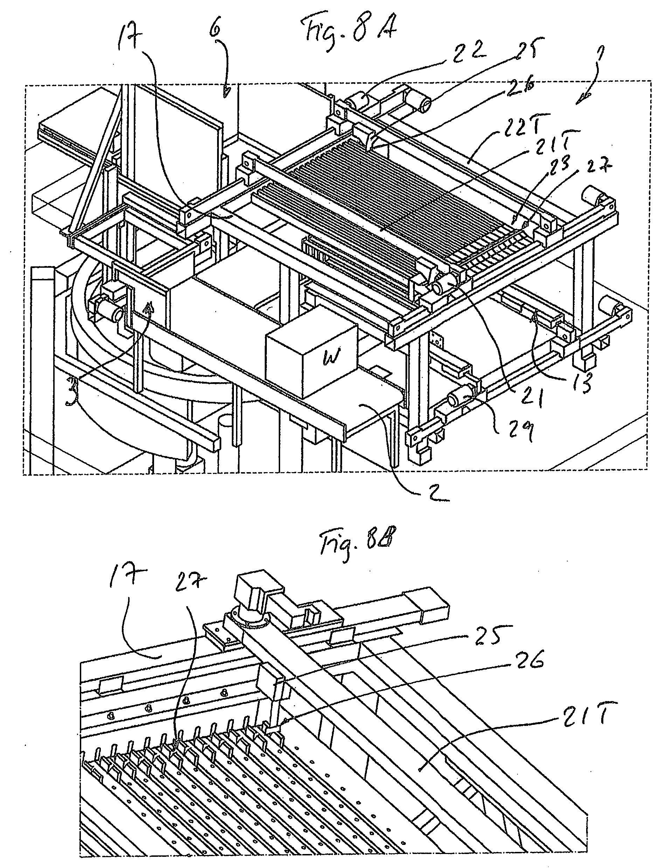

In Figur 8A und 8B ist eine alternative Variante der zuvor beschriebenen Vorrichtung dargestellt, die sich im Wesentlichen davon unterscheidet, dass die Einzel-Pusher der Pusher-Batterie jeweils keine eigenen Antriebe aufweisen und dass keine Schiebeplatten-Batterie vorgesehen ist.

Es wird daher nachfolgend lediglich auf diese Unterschiede eingegangen.

In dieser Variante weisen die Einzel-Pusher zwei gemeinsame Antriebe 21, 22 auf, die wahlweise mit einem bestimmten Einzelpusher zu dessen Antrieb kuppelbar sind. Dazu sind die Antriebe 21, 22 in X-Richtung auf dem Gestell 17 oberhalb der Einzelpusher mittels einer Traverse 21 T, 22T verfahrbar und mit dem Antriebsschlitten 23 der Einzel-Pusher 14 kuppelbar.

Der Antrieb 21, 22 weist jeweils einen eigentlichen Antriebsblock 24, 25 auf, der in Z-Richtung analog der obigen Ausgestaltung der Pusher verfahrbar ist. Um den jeweiligen Einzel-Pusher 14 anzutreiben weist der Antriebsblock 24, 25 eine in Richtung der Antriebsschlitten 23 weisende Kuppelnase 26 auf, die in eine quer zur X-Richtung verlaufende Nut 27 im Antriebsschlitten 23 eingreift.

Zum Antrieb eines bestimmten Einzel-Pushers wird der Antrieb 21 oder 22, je nach Einzel-Pusher, mittels der Traverse so verfahren, dass die entsprechende Kuppelnase 26 in die Nut 27 des jeweiligen Antriebsschlittens 23 eingreift. Anschließend wird der Antriebsblock 25 bzw. 25 verfahren und nimmt den Antriebsschlitten 23 bzw. den Einzel-Pusher 14 in Z-Richtung mit.

Die Einzelpusher sind also an einem Gestell aufgehangen, an dem sie in Z-Richtung auf den Stapel zu (oder weg) beweglich sind. Sie werden dazu von einem quer dazu, also in X-Richtung, verlaufenden oberhalb angeordneten Schlitten oder Traverse, der den Antrieb trägt, angefahren, wobei ein Kupplungs- oder Mitnehmerelement dabei die Wirkverbindung zwischen Antrieb und Einzelpusher herstellt.

Im Detail ist dies in Figur 8B besser erkennbar. Erkennbar ist auch, dass das Mitnehmerelement (Kuppelnase 26) dabei blatt- oder streifenförmig von dem Antrieb bzw. dessen Verfahrtraverse 21T, 22T nach unten hängt und in eine nach oben offene Nut 27 am Antriebsschlitten des bzw. der benachbarten Einzelpusher 14 eingreift, wozu der Mitnehmer 26 eine entsprechende Breite aufweist, so dass er durch entsprechende Positionierung entweder in die Nut 27 eines Einzelpushers oder in die zwei Nuten 27 benachbarter Einzelpusher 14 eingreifen kann.

Weiterer Unterschied in dieser Variante ist die Verwendung von lediglich zwei Schiebeplatten 13, die nun über einen Antrieb 28, 29 in X-Richtung entlang des Stapelplatzes 6 verfahrbar sind, so dass die jeweilige Schiebeplatte entsprechend eines Einzel-Pushers positioniert werden kann. Dazu ist die jeweilige Linearachse der Schiebeplatte analog einer Traverse verfahrbar ausgestaltet.

Es ist auch möglich, beide Schiebeplatten gemeinsam anzusteuern, sodass ein Packstück W auf beiden Schiebeplatten gleichzeitig aufliegt. Offensichtlich kann dies mit entsprechender Ansteuerung und Verwendung von z.B. zwei Einzelpushern kombiniert werden.

Es versteht sich, dass in der Vorrichtung der Figuren 1 bis 8 ebenfalls eine Aufspreizeinrichtung enthält, die aber aus Verständnisgründen in den Figuren weggelassen wurde. Sie entspricht aber vollständig der weiter unten erläuterten Variante.

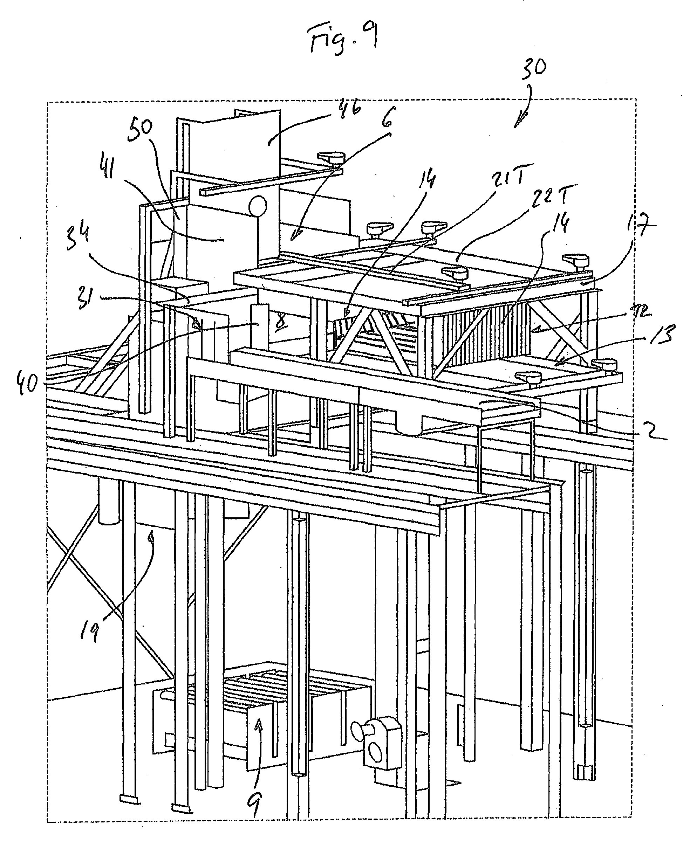

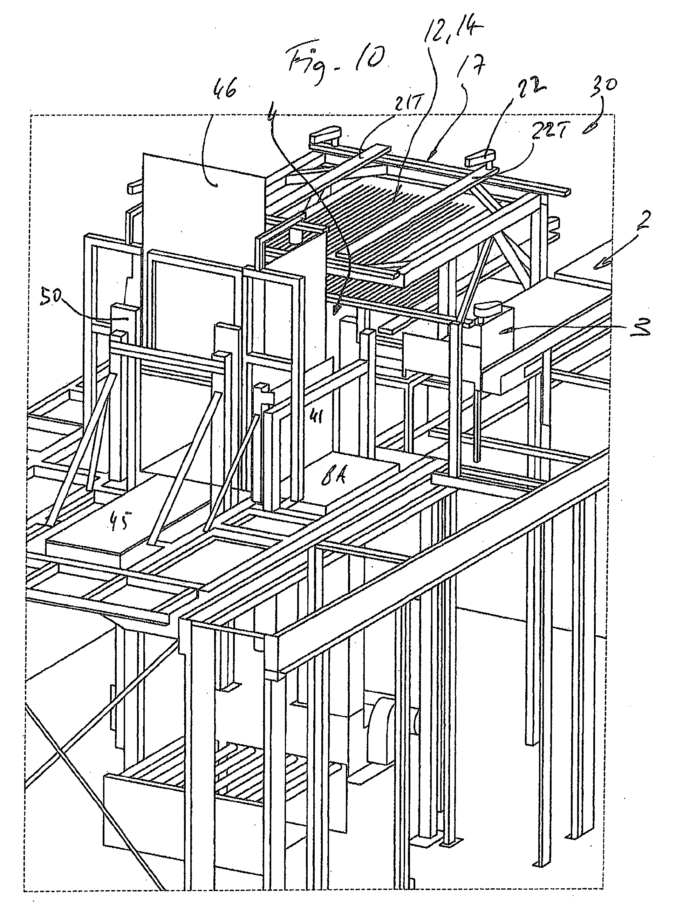

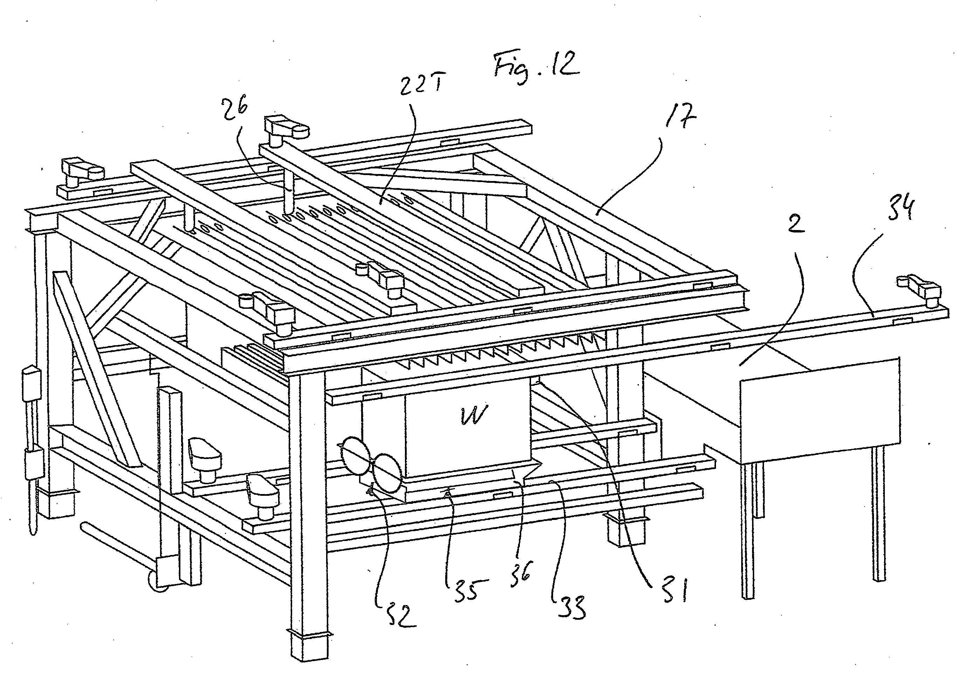

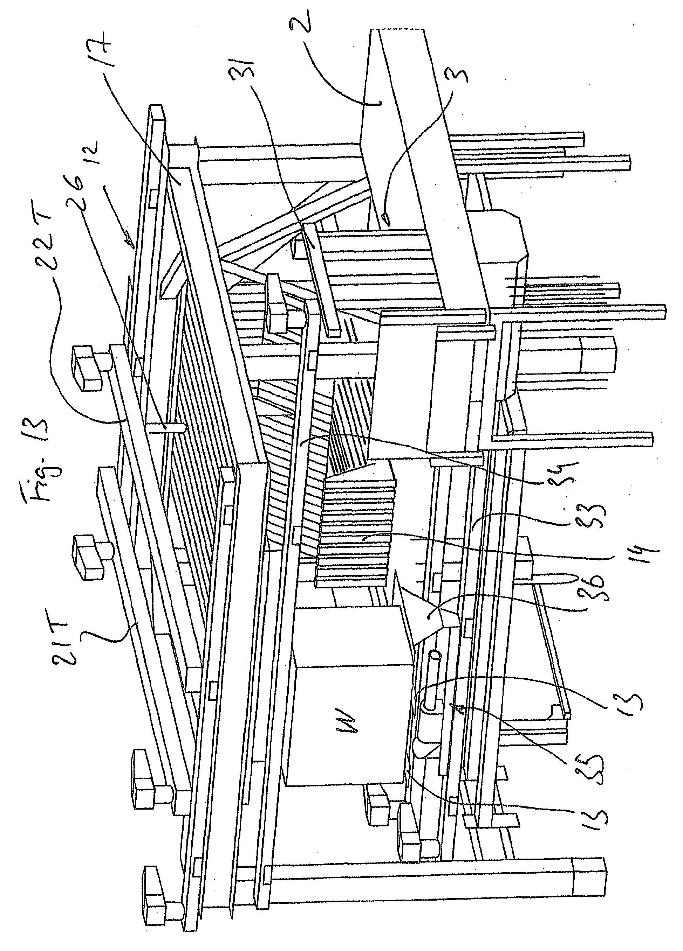

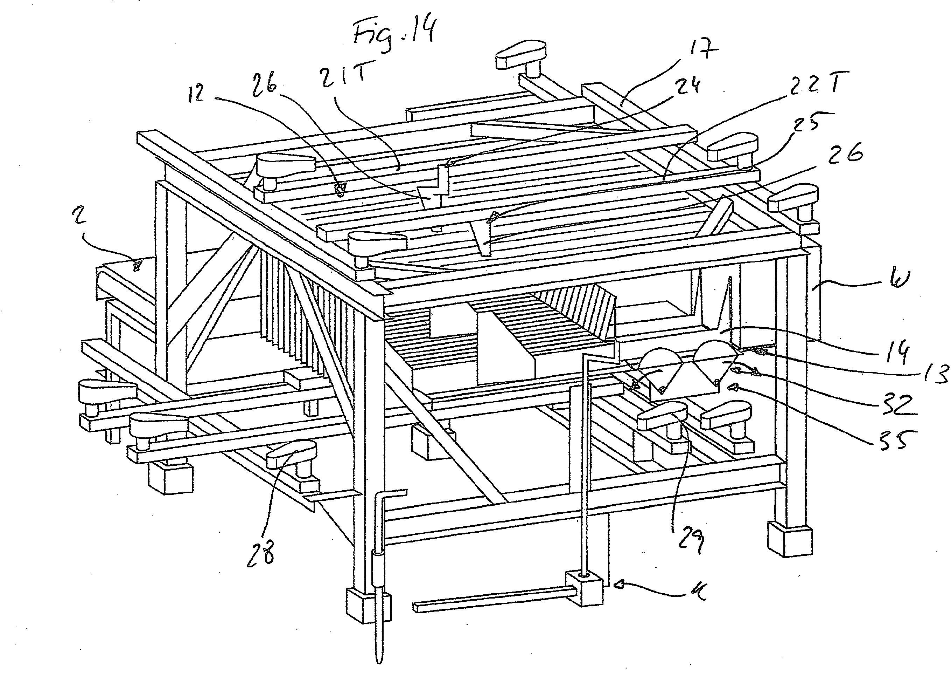

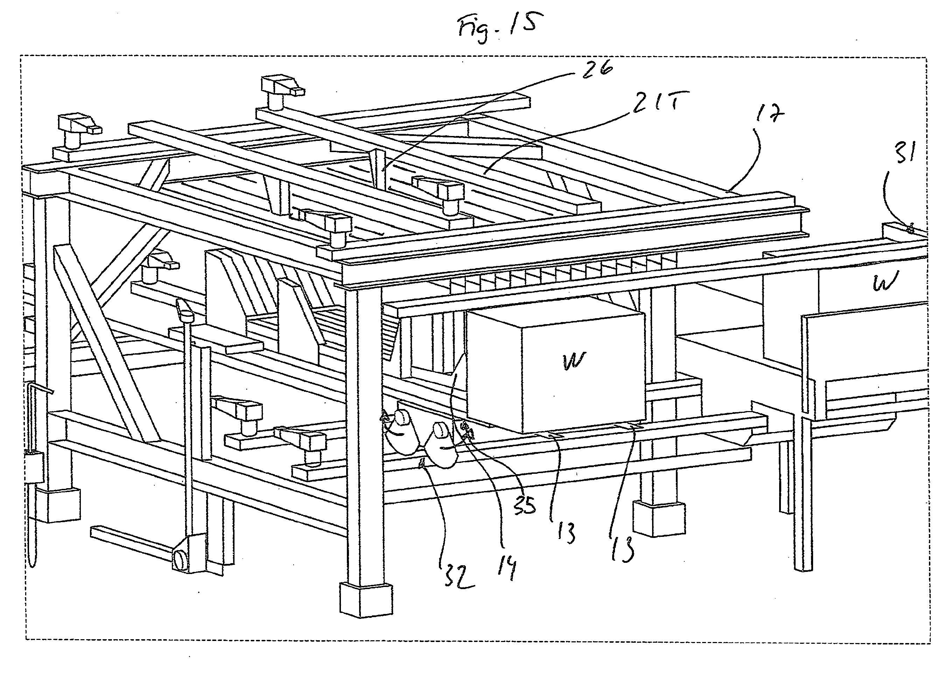

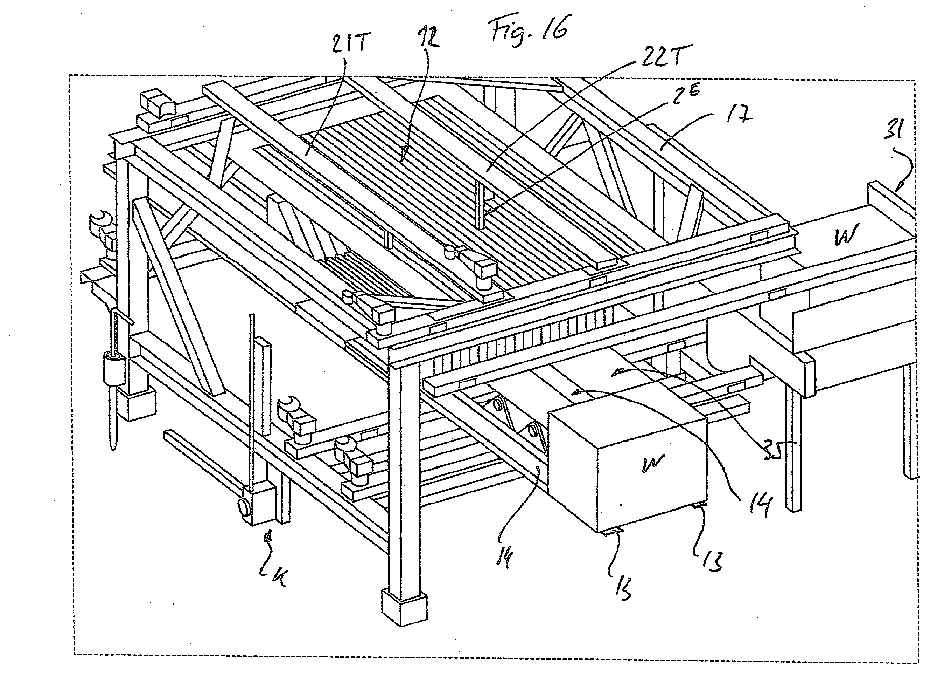

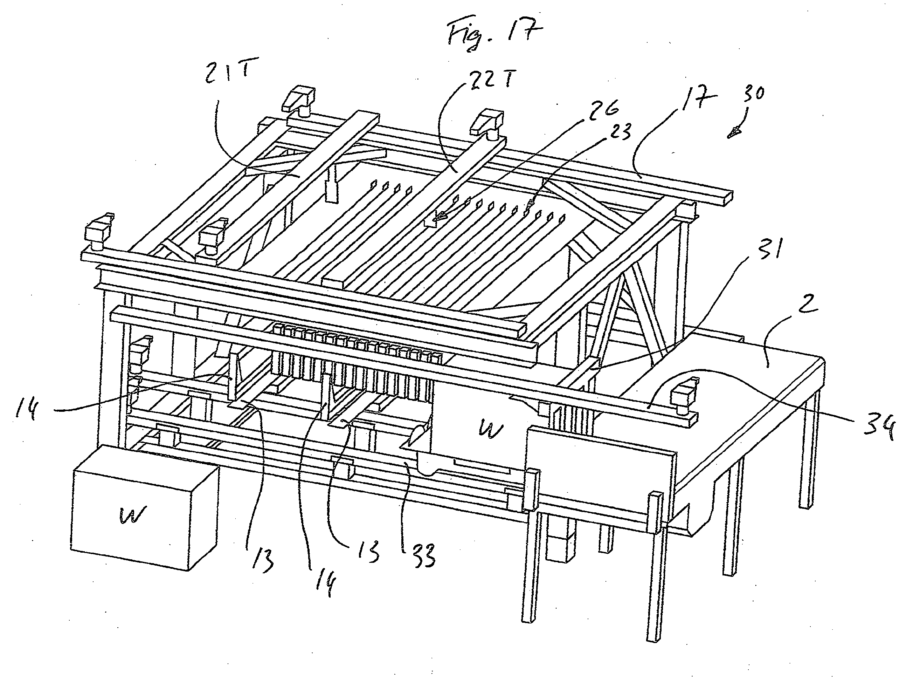

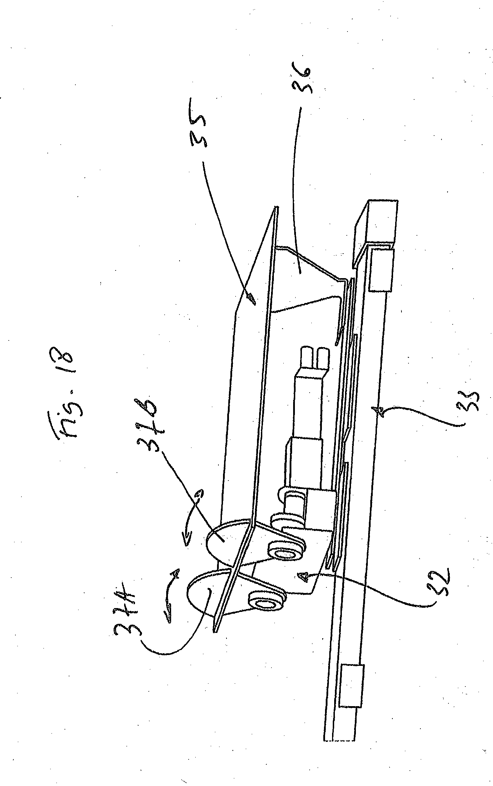

In den Figuren 9 bis 26 ist eine weitere erfindungsgemäße Vorrichtung 30 beschrieben, die im Gegensatz zu den obigen Vorrichtungen als Positionierförderer einen Verfahrwagen oder Shuttle für den Transport der Packstücke W in X-Richtung entlang des Stapelplatzes 6 unter Verwendung der Variante der Pusher-Batterie/Schiebeplatten-Anordnung aus Figuren 8A, B aufweist.

Ferner werden im Zusammenhang mit dieser Ausführungsform weitere Details der Ausgestaltung des Stapelplatzes (Stapelhilfen, Zwischenplatten) etc. beschrieben.

Der Verfahrwagen 35 ersetzt also den Endlos-Förderer 4 für die X-Richtungspositionierung der Packstücke W.

Der Verfahrwagen 35 übernimmt von dem Zuführförderer 2 einzelne Packstücke W. Dazu schiebt der Umsetzer 31 die Packstücke vom Zuführförderer 2 auf den Verfahrwagen 4.

Der Verfahrwagen 35 weist einen beweglichen Anschlag 32 auf der abgewandten Seite auf, um ein Herabfallen der Packstücke W von der eigentlichen Transportfläche 35T zu verhindern und eine genau Positionierung zu erlauben. Damit das Packstück W beim Beschleunigen des Verfahrwagens 35 nicht herunterfällt, wird der Umsetzer 31 synchron mit Verfahrwagen 35 in X-Richtung bewegt, so dass das jeweilige Packstück auf dem Verfahrwagen 35 zwischen dem Anschlag 32 und dem Umsetzer 31 eingeklemmt transportiert wird

Zur Bewegung in X-Richtung sind Schienen 33 vorgesehen, auf denen der Verfahrwagen 35 zwischen Stapelplatz 6 und Pusher/Schiebeplatteneinheit beweglich ist. Parallel und oberhalb dazu ist eine entsprechende Schiene 34 für die synchrone Bewegung des Umsetzers 31 angeordnet. Die Schienen 33, 34 sind ebenso an dem Gestell 17 befestigt.

Der Verfahrwagen 35 ist mit einem C-förmigen Gestell 36 ausgebildet so dass dann die mindestens eine Schiebeplatte zwischen die Schenkel des "C" hindurchgreifen kann, so dass keine gegenseitige Behinderung ergibt.

Die eigentliche Trägerfläche 35T für das Packstück ist also nur an einer Seite an dem Fahrgestell des Verfahrwagens 35 befestigt und kragt von dort aus.

Der Anschlag 32 ist aus der Anschlagstellung weg bewegbar, vorzugsweise abklappbar bzw. verschwenkbar, so dass der Verfahrwagen nach erfolgter "Übergabe" des Packstücks an die Schiebeplatte (vgl. oben) bereits das nächste Packstück "holen" kann.

Der Anschlag ist 32 dazu um eine Achse aus der Anschlagstellung in eine Freigabestellung schwenkbar. Diese Ausführung benötigt wenig Platz und "kollidiert" auch nicht mit den Schiebeplatten. Der Anschlag weist zwei gegenläufig verschwenkbare Anschlagflügel auf, um einen breiten Anschlag bzw. Fläche bereitzustellen.

Dies erlaubt es auch, dass der Verfahrwagen nach erfolgter "Übergabe" des Packstücks W an die Schiebeplatte vor Beendigung des Stapelvorgangs bereits zurück zur Übernahme des nächsten Packstücks vom Zuführförderer 2 fährt.

Der Verfahrwagen 35 fährt also mit vom hochgeklappten Anschlag 32 und Umsetzer 31 eingeklemmten Packstück W an die jeweilige vorberechnete X-Position auf den Schienen 33.

Gleichzeitig verfahren die Traversen 21T, 22T für die Einzelpusher von links und von rechts in X-Richtung in die benötigte Position zur Wechselwirkung mit den Antriebsschlitten 27 der Einzelpusher 14, wobei der Mitnehmer 26 in die jeweilige Nut 27 eingreift. Ebenso werden die Schiebeplatten 13 in X-Richtung positioniert.

Dann findet wie beschrieben das Abschieben vom Verfahrwagen 35 (Positionierförderer) durch die Einzelpusher, vorliegend zwei Stück, auf die Schiebeplatten, vorliegend ebenfalls zwei Stück, statt, wozu der Antriebsblock 24, 25 entlang der Traverse in Z-Richtung verfährt und so den Einzelpusher 14 jeweils mitnimmt. Entsprechend werden die zwei Schiebeplatten 13 in Z-Richtung ausgefahren, um das Packstück W vom Verfahrwagen 35 zu übernehmen, wobei sie aufgrund des C-förmigen Gestells 36 durch den Verfahrwagen 35 "hindurchgreifen" können.

Sobald das Packstück W vollständig auf den Schiebeplatten ruht, wird der Anschlag 32 abgeklappt und der Verfahrwagen 35 kann zurück zur Übernahme fahren.

Der Anschlag 32 ist dabei durch zwei gegen bzw. im Uhrzeigersinn drehbare Anschlagscheiben 37A, B ausgebildet. Die Anschlagscheibe 37A wird gegen den Uhrzeigersinn und die Anschlagscheibe 37B im Uhrzeigersinn von der das Packstück W begrenzenden aufrechten Stellung nach unten verschwenkt oder abgeklappt, so dass der Verfahrwagen 35 frei ist.

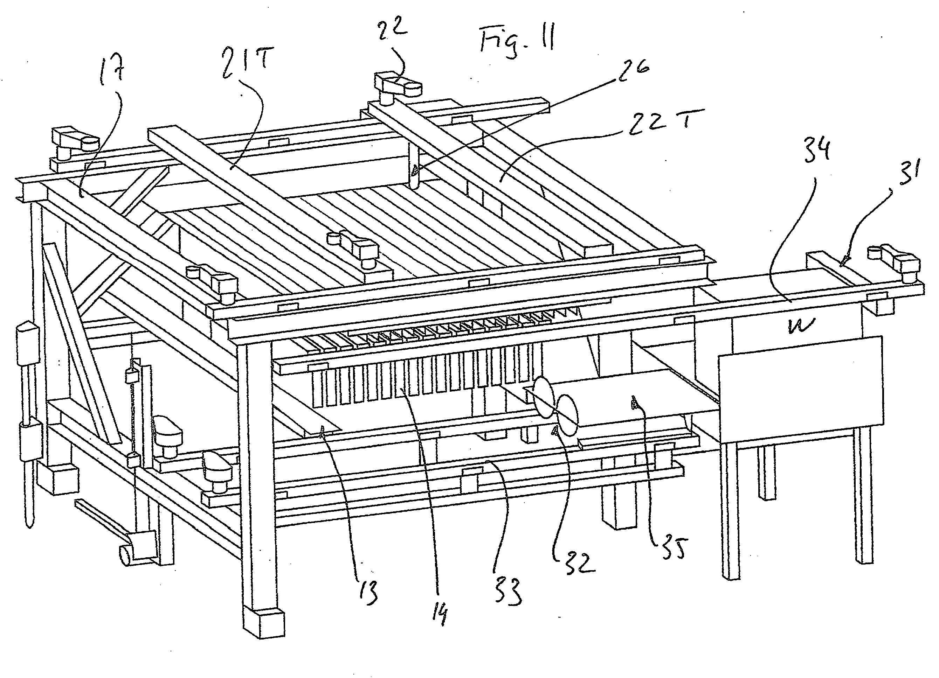

In Figur 11 ist auch eine handbetriebene Kurbel K erkennbar, die den Mechanismus antreibt, um ein manuelles Eingreifen zu ermöglichen bzw. erleichtern, wozu das Gestell 17 (zusammen mit der Einheit aus Pusher und Schiebeplatten sowie Positionierförderer usw.) von dem Stapelplatz 6 weg bewegt wird.

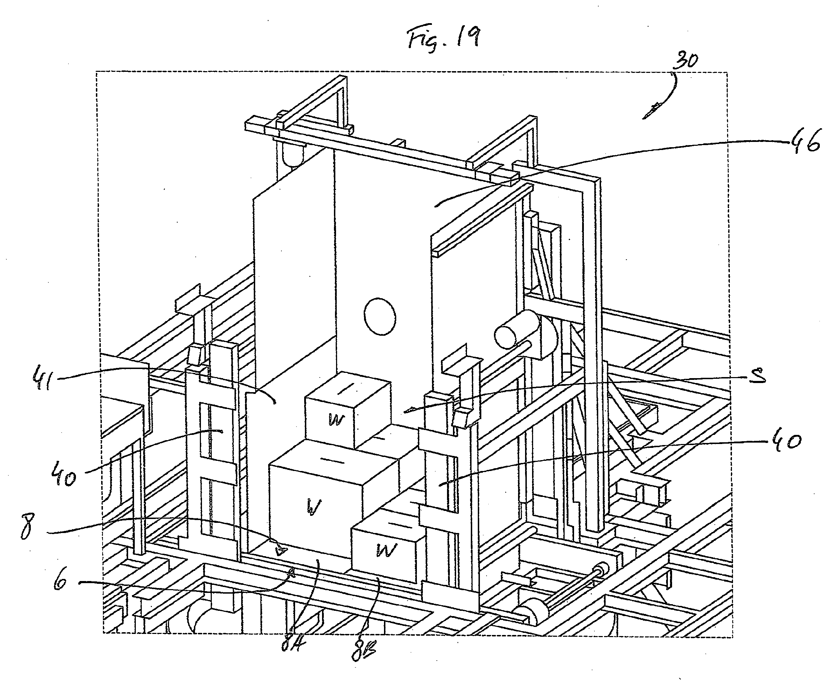

In den Figuren 19 bis 22 ist der Stapelplatz 6 im Detail beim Stapeln bzw. beim Beenden des Stapelns bei der Vorrichtung 30 gezeigt.

Im Unterschied zur Ausführungsform der Figuren 1 bis 7 dient hier die Zwischenplatte 8 nicht nur zur Bilden der ersten Lage des Stapels S, sondern für den gesamten Stapel S. Dieser wird erst nach Fertigstellung komplett an die wartende Palette P (oder Rollwagen R, siehe unten) übergeben, wobei die seitlichen Wände 41 als Abstreifer dienen.

Damit dies funktioniert, ist die Zwischenplatte 8 bzw. deren Teile 8A, B höhenveränderlich an einem Hubgestell 40 aufgehängt, so dass sich diese nach Fertigstellung einer Lage jeweils nach unten absenken lässt, damit das Stapelniveau sich auf Höhe des Positionierförderers befindet.

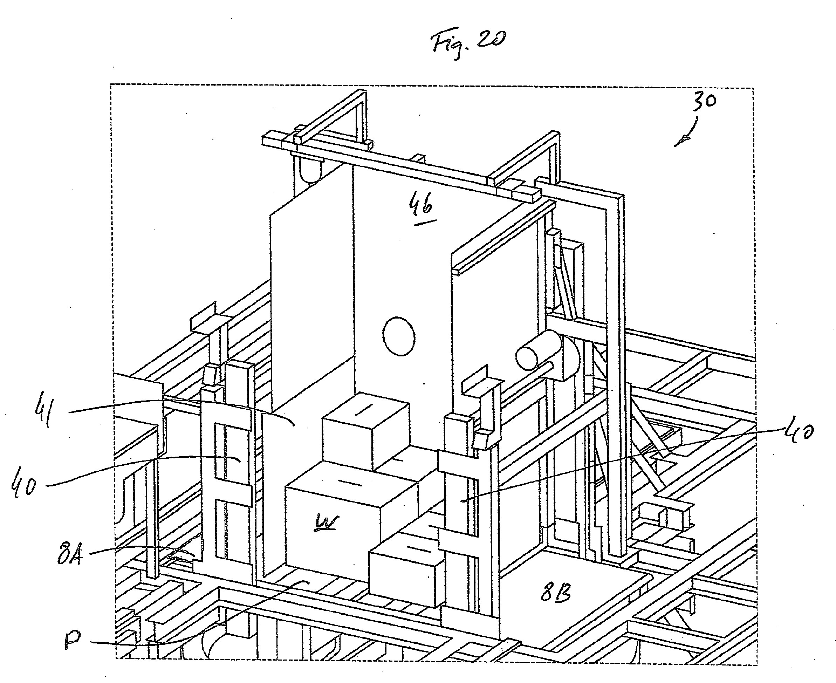

Ist der Stapel S fertig gestellt, werden die Teile 8A, B der Zwischenplatte 8 zur Seite hin unterhalb des Rands der seitlichen Wände 41 (in X-Richtung) bewegt, wobei die Packstücke bzw. der Stapel im Stapelplatz 6 verbleibt und nach vollständiger Entfernung der Zwischenplatte 8 auf die wartende Palette P (oder Rollwagen R, siehe unten) zu ruhen kommt (vgl. Figuren 19 und 20).

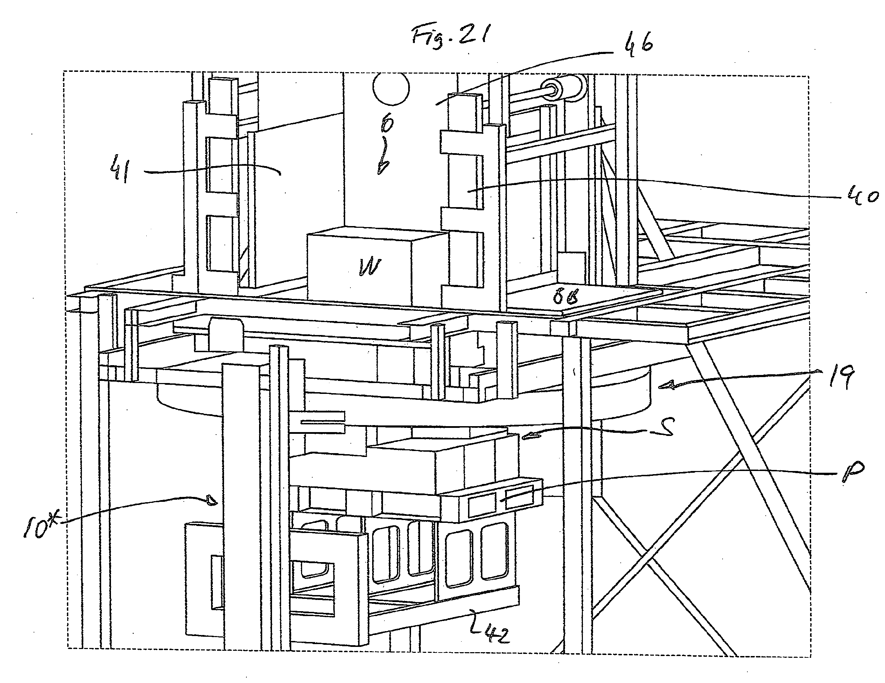

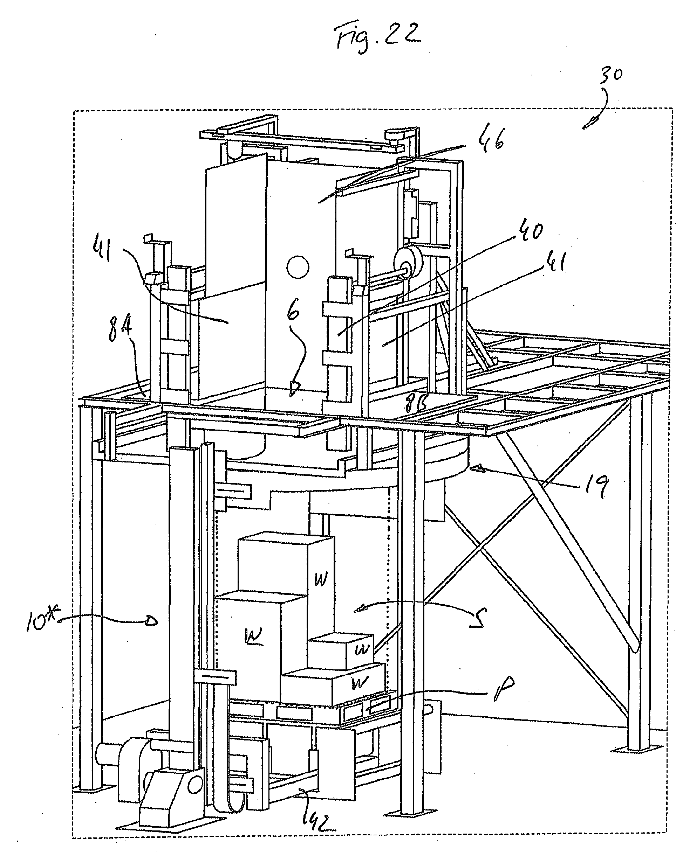

Die Palette P (oder Rollwagen R, siehe unten)wird mit dem Stapel S beladen weiter abgesenkt und durchläuft (wie oben) eine Wickeleinheit 19 zum Umwickeln mit Stretchfolie zur Stabilisierung (vgl. Figuren 21 und 22).

Gleichzeitig wurde die Zwischenplatte 8 wieder geschlossen und eine neue Stapelbildung kann begonnen werden.

Anschließend wird die Palette mit dem Stapel von dem gabelartigen Träger 42 der Hub- und Absenkeinheit 10* auf einen Rollenförderer 9 zum Abtransport übergeben bzw. abgeladen. Die der Hub- und Absenkeinheit 10* entspricht weitestgehend der zuvor im Zusammenhang mit den Figuren 1 bis 7 beschriebenen, ist jedoch nun ein Ein-Balken-Heber.

Anschließend wird eine neue leere Palette für den neuen Stapel aufgenommen und in die Wartestellung unterhalb der Zwischenplatte gehoben.

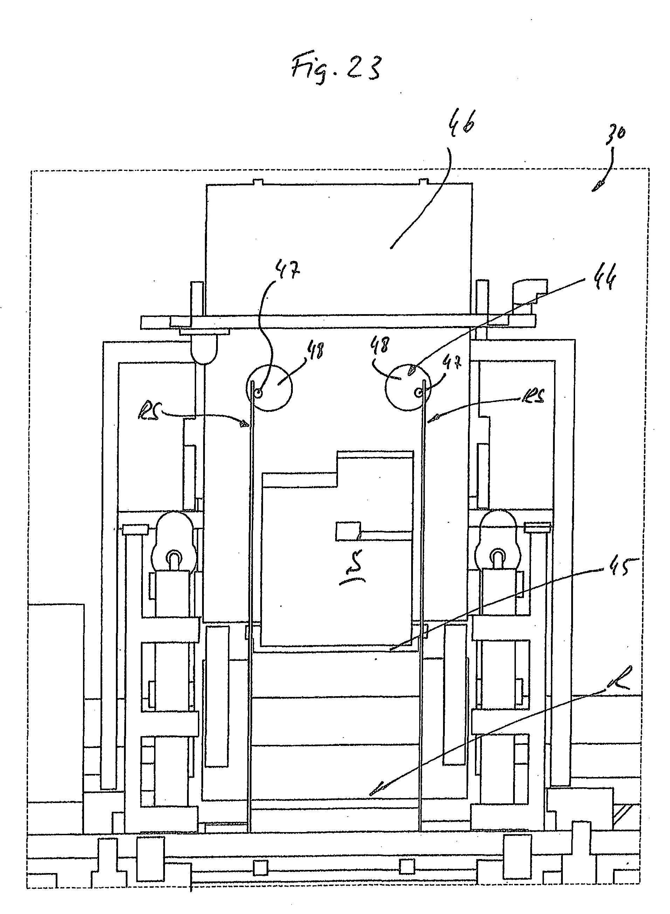

In den Figuren 23 bis 26 ist eine schematische perspektivische Ansicht auf die eben besprochene Vorrichtung 30 zum automatischen mehrlagigen Bestapeln gezeigt, wobei nun ein Rollwagen R im Bereich des Stapelplatzes 6 beim Stapeln angeordnet ist.

Die Vorrichtung 30 eignet sich also nicht nur zum Beladen von Paletten P, sondern auch zum Beladen von Rollwagen R.

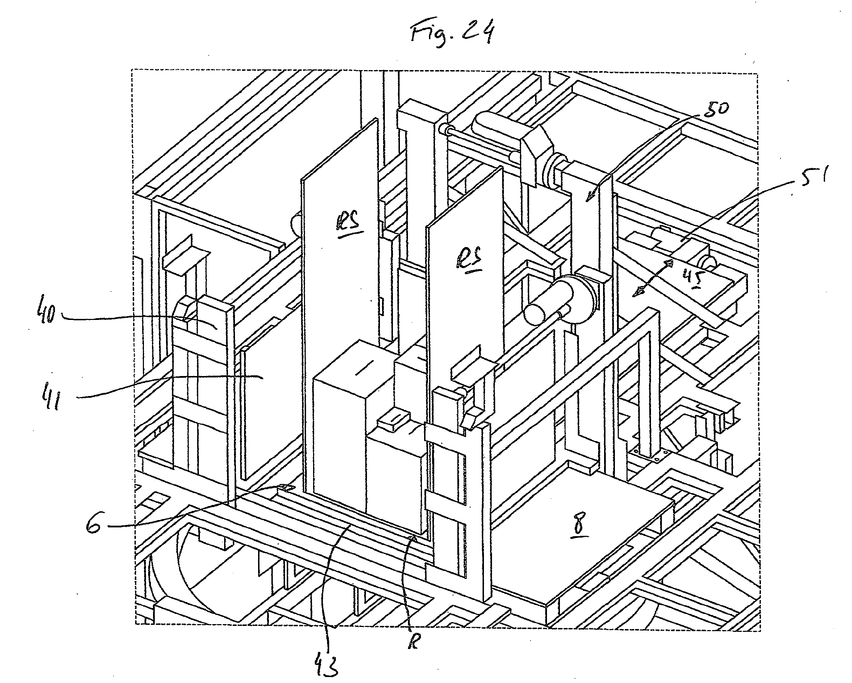

Die Rollwagen R werden dazu von demselben Förderer 9 zugeführt bzw. abtransportiert wie die Paletten. Dazu sind die Rollwagen R auf Trägerpaletten 43 (vgl. Figur 24) angeordnet, die sich wie normale Paletten handhaben lassen.

Die Rollwagen R werden ebenso von der Hub- und Absenkeinheit 10* von unten in den Stapelplatz 6 eingefahren.

Um die Seitenwände RS des Rollwagens R auseinanderzuspreizen, ist eine Aufspreizeinrichtung 44 vorgesehen, die die Seitenwände RS zumindest senkrecht oder sogar leicht schräg nach Außen aufgebogen während des Stapeins hält.

Die Seitenwände RS haben nämlich die Eigenschaft, sich nach Innen aufeinander zu zu bewegen.

Da die Seitenwände RS des Rollwagens R mit den Teilen 8A, B der Zwischenplatte korrespondieren und deren Einsatz somit nicht möglich ist, gibt es für die Bestapelung von Rollwagen R eine gesonderte und höhenverstellbare Zwischenplatte 45, die auf der dem Positionierförderer 2 abgewandten Seite des Stapelplatzes 6 angeordnet ist.

Sie wird nach Aufspreizen der Seitenwände RS von dieser Seite in den Rollwagen R in Z-Richtung mittels eines Antriebs 51 schlittenartig eingeführt. Die Zwischenplatte 45 ist zur Höhenverstellung analog der Zwischenplatte 8 an einem Hubgestell 50 aufgehangen.

Anschließend wird wie zuvor der Stapel S durch Ablegen der Packstücke W auf der Zwischenplatte 45 gebildet.

Als Abstreifer beim Übergeben des fertig gestapelten Stapels an den Rollwagen R durch Zurückziehen der weiteren Zwischenplatte 45 dient die hintere Seitenwand 46 (Diese ist zur besseren Übersicht in Figur 24 weggelassen). Die hintere Seitenwand 46 ist zudem Höhenverfahrbar, um den Hub bzw. das Absenken der Zwischenplatte 45 "mitzumachen", und in Richtung des Positionierförderers 2 bzw. Stapelplatzes 6 (Z-Richtung) beweglich, so dass unterschiedlich große Rollwagen verwendbar sind.

Die hintere Seitenwand 46 dient auch als Anbringungsort für die Aufspreizeinrichtung 44.

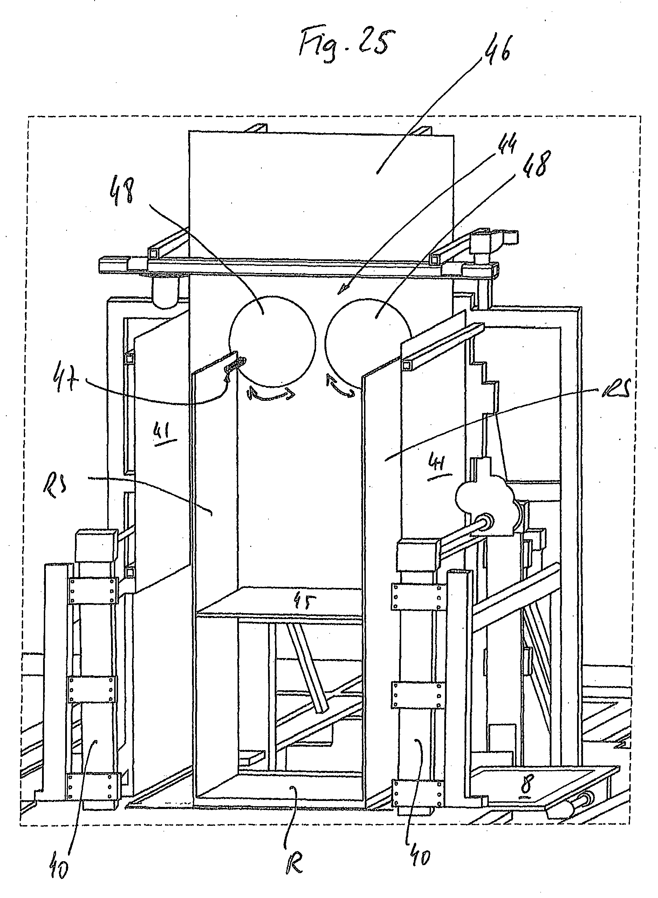

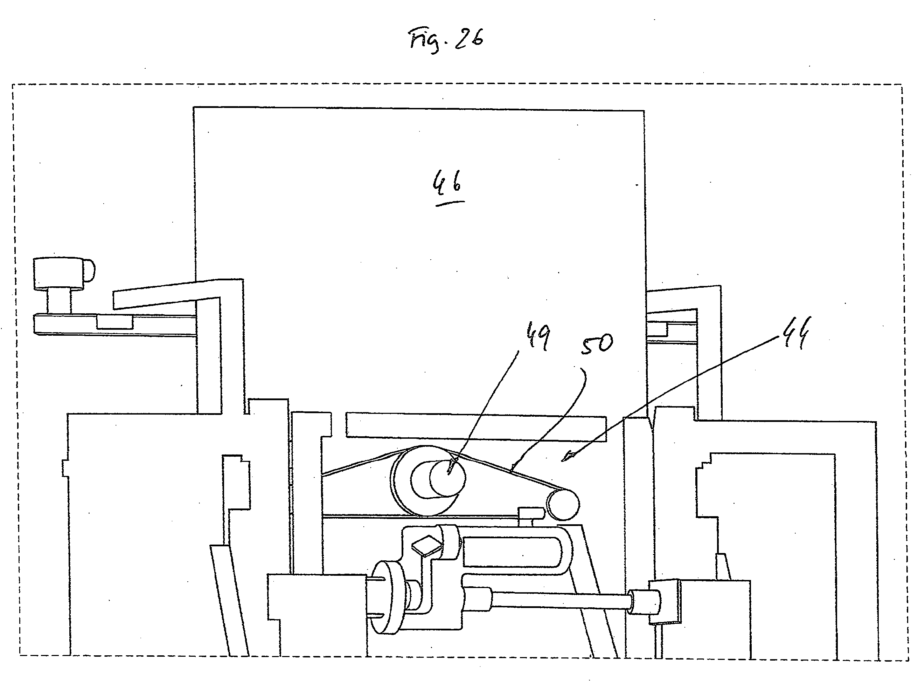

Die Aufspreizeinrichtung 44 besteht aus zwei auf gleicher Höhe im Bereich der erwarteten Seitenwände des Rollwagens R angeordneter von der Seitenwand nach vorne in den Rollwagenraum vorstehender Zapfen 47, die seitlich nach Außen zum Aufspreizen verlagerbar sind. Dazu sind die Zapfen 47 jeweils auf einer vertikal ausgerichteten Drehscheibe 48 angeordnet, die von einem gemeinsamen Antrieb 49 über ein Umlaufendes Seil angetrieben werden. Der Antrieb ist dabei auf der Rückwand der hinteren Seitenwand 46 angeordnet (vgl. Figur 25 und 26).

Beim Einführen des Rollwagens stehen die Zapfen 47 also innen. Nach dem Einführen werden sie mittels einer Drehung der Drehscheiben 48 nach Außen verlagert und spreizen somit die Seitenwände RS auf.

Ist der Stapelvorgang beendet, werden die Zapfen 47 wieder nach Innen verlagert und die Zwischenplatte 45 an der als Abtreifer dienenden hinteren Seitenwand 46 zurückgezogen, so dass der Stapel S der Packstücke W auf dem Rollwagen R zu liegen kommt.

Anschließend wird dieser mittels der Hub- und Absenkeinheit 10* durch die Folienwickeleinheit 19 und letztendlich auf dem Rollenförderer 9 zum Abtransport bewegt.

Danach kann der Vorgang von neuem beginnen.

## Patentansprüche

1. Vorrichtung zum automatischen Stapeln von Packstücken auf einer Unterlage in einer vorbestimmten räumlichen Anordnung zur Ausbildung eines Stapels mit
- mindestens einem Zuführförderer, der die vereinzelten Packstücke (W) in einer vorbestimmten Reihenfolge bereitstellt;
- mit einer Hub- und Senkeinheit zum Heben und Senken einer in einem Stapelplatz (6) angeordneten Unterlage (R, 8) in Y-Richtung;
- mit an einem Abgabeende des Zuführförderers angrenzenden Verlagerungsmitteln, die Packstücke (W) von dem Zuführförderer (2) übernehmen und an die vorherbestimmte Position im Stapel (S) transportieren;
wobei die Verlagerungsmittel umfassen:
- einen an dem Abgabeende des Zuführförderers angrenzenden Positionierförderer (4), der horizontal und längs zu einer Seite des Stapelplatzes (6) angeordnet ist, um die Packstücke (W) in X-Richtung zu positionieren,
- mindestens eine Schiebeplatte (13) und einen Pusher (14), um die Packstücke (W) von dem Positionierförderer in Z-Richtung an die vorherbestimmte Position im Stapel (S) zu transportieren,
wobei die mindestens eine Schiebeplatte als horizontal und längs der Seite des Stapelplatzes (6) und quer dazu beweglich ausgebildete flache streifenförmige Platte ausgebildet ist, um die Packstücke (W) beim Abschieben der Packstücke (W) durch den Pusher von dem Positionierförderer an der X-Richtungsposition zu übernehmen und in Z-Richtung auf der Unterlage (R, 8, 45) oder in dem Stapel (S) abzulegen, **dadurch gekennzeichnet, dass** die Vorrichtung eine Aufspreizeinrichtung (44) umfasst, die die Seitenwände (RS) eines Rollcontainers (R) zum Bestapeln zumindest senkrecht oder leicht schräg nach Außen aufgebogen aufspreizt, wobei die Aufspreizeinrichtung zwei auf gleicher Höhe im Bereich der erwarteten Seitenwände (RS) des Rollwagens (R) angeordneter in den Stapelplatz (6) vorstehende verlagerbare Zapfen (47) umfasst, wobei die Zapfen (47) zwischen einer Aufspreizstellung und einer Nicht-Aufspreizstellung beweglich sind.

2. Vorrichtung nach Anspruch 1, **dadurch gekennzeichnet, dass** die Zapfen (47) seitlich nach Außen zum Aufspreizen verlagerbar sind.

3. Vorrichtung nach Anspruch 1 oder 2, **dadurch gekennzeichnet, dass** die Zapfen (47) jeweils auf einer vertikal ausgerichteten Drehscheibe (48) angeordnet sind.

4. Vorrichtung nach Anspruch 3, **dadurch gekennzeichnet, dass**, die Drehscheiben (48) einen gemeinsamen Antrieb (49) über ein umlaufendes Seil aufweisen.

5. Vorrichtung nach einem der vorhergehenden Ansprüche, **dadurch gekennzeichnet, dass** die Aufspreizeinrichtung (44) an einer den Stapelplatz (6) begrenzenden hinteren Seitenwand (46) angeordnet ist.

6. Vorrichtung nach einem der vorhergehenden Ansprüche, dass die Rollwagen (R) auf Trägerpaletten (43) in dem Stapelplatz (6) der Hub- und Senkeinheit angeordnet sind.

7. Verfahren zum automatischen Stapeln von Packstücken auf einer Unterlage in einer vorbestimmten räumlichen Anordnung zur Ausbildung eines Stapels umfassend die Schritte:
- Übernahme der Packstücke (W) von einem Zuführförderer (2);
- Verlagerung der Packstücke (W) an die vorherbestimmte Position im Stapel (S), durch Positionieren der Packstücke (W) in X-Richtung und Positionieren der Packstücke (W) in Z-Richtung und Heben und Senken der in einem Stapelplatz (6) angeordneten Unterlage;
wobei als Unterlage Paletten (P) oder Rollwagen (R) verwendet werden, wobei die Seitenwände (RS) der Rollwagen (R) beim Bestapeln aufgebogen werden, wozu zwei auf gleicher Höhe im Bereich der erwarteten Seitenwände (RS) des Rollwagens (R) angeordnete in den Stapelplatz (6) vorstehende verlagerbare Zapfen (47) verwendet werden, die zwischen einer Aufspreizstellung und einer Nicht-Aufspreizstellung beweglich sind.

8. Verwendung einer Vorrichtung nach einem der Ansprüche 1 bis 6 zur Durchführung des Verfahrens nach Anspruch 7.

## Claims

1. Apparatus for automatically stacking packages on a support in a predetermined spatial arrangement to form a stack including
- at least one supply conveyor, which provides the individual packages (W) in a predetermined sequence;
- a raising and lowering unit for raising and lowering a support (R, 8), arranged in a stacking location (6) in the Y direction;
- shifting means adjoining a delivery end of the supply conveyor, which take over the packages (W) from the supply conveyor (2) and transport them to the predetermined position in the stack (S);
wherein the shifting means include:
- a positioning conveyor (4) adjoining the delivery end of the supply conveyor, which is arranged horizontally and along one side of the stacking location (6) in order to position the packages (W) in the X direction,
- at least one sliding plate (13) and a pusher (14) in order to transport the packages (W) from the positioning conveyor in the Z direction to the predetermined position in the stack (S),
wherein the at least one sliding plate is constructed in the form of a flat, lamellar plate formed horizontally and along the side of the stacking location (6) and movable transversely thereto in order to take over the packages (W), when the packages (W) are slid off the positioning conveyor by the pusher to the X direction position and to deposit them in the Z direction on the support (R, 8, 45) or in the stack (S), **characterised in that** the apparatus includes a spreading device (44), which spreads the side walls (RS) of a roller container (R) for stacking at least vertically or bent slightly obliquely outwardly, wherein the spreading device includes two movable pegs (47), which are arranged at the same height in the region of the expected side walls (RS) of the trolley (R) and project into the stacking location (6), wherein the pegs (47) are movable between a spreading position and a non-spreading position.

2. Apparatus as claimed in Claim 1, **characterised in that** the pegs (47) are movable laterally outwardly for the purpose of spreading.

3. Apparatus as claimed in Claim 1 or 2, **characterised in that** the pegs (47) are arranged on a respective vertically oriented rotary disk (48).

4. Apparatus as claimed in Claim 3, **characterised in that** the rotary disks (48) include a common drive (49) by means of a rotary cable.

5. Apparatus as claimed in one of the preceding claims, **characterised in that** the spreading device (44) is arranged on a rear side wall (46) bordering the stacking location (6).

6. Apparatus as claimed in one of the preceding claims, **characterised in that** the trolleys (R) are arranged on support pallets (43) in the stacking location (6) of the raising and lowering unit.

7. A method of automatically stacking packages on a support in a predetermined spatial arrangement to form a stack including the steps of:
- taking over the packages (W) from a supply conveyor (2);
- shifting the packages to the predetermined position in the stack (S) by positioning the packages (W) in the X direction and positioning the packages in the Z direction and raising and lowering the support arranged in a stacking location (6); wherein pallets (P) or trolleys (R) are used as the support, wherein the side walls (RS) of the trolleys (R) are used as the support, wherein the side walls (RS) of the trolleys (R) are bent up during the stacking, for which purpose two movable pegs (47), which are arranged at the same height in the vicinity of the expected side walls (RS) of the trolley (R) and project into the stacking location (6), are used which are movable between a spreading position and a non-spreading position.

8. Use of an apparatus as claimed in one of Claims 1 to 6 for carrying out the method of Claim 7.

## Revendications

1. Dispositif d'empilage automatique de paquets sur un support selon une disposition spatiale prédéterminée pour former une pile, ledit dispositif comprenant
- au moins un transporteur d'alimentation qui fournit les paquets séparés (W) dans un ordre prédéterminé ;
- une unité d'élévation et d'abaissement destinée à soulever et abaisser un support (R, 8), disposé à un emplacement d'empilage (6), dans la direction Y ;
- des moyens de déplacement, adjacents à une extrémité de décharge du transporteur d'alimentation, qui prennent en charge les paquets (W) amenés par le transporteur d'alimentation (2) et qui les transportent à la position prédéterminée dans la pile (S) ;
les moyens de déplacement comportant :
- un transporteur de positionnement (4), adjacent à l'extrémité de décharge du transporteur d'alimentation, qui est disposé horizontalement et longitudinalement par rapport à un côté de l'emplacement d'empilage (6), pour positionner les paquets (W) dans la direction X,
- au moins une plaque coulissante (13) et un poussoir (14) pour transporter les paquets (W) dans la direction Z du transporteur de positionnement à la position prédéterminée dans la pile (S),
l'au moins une plaque coulissante étant configurée en plaque plate en forme de bande configurée pour être mobile horizontalement et le long du côté de l'emplacement d'empilage (6) et transversalement à celui-ci, pour prendre en charge les paquets (W) lors du coulissement des paquets (W) par le poussoir du transporteur de positionnement à la position dans la direction X et pour les déposer dans la direction Z sur le support (R, 8, 45) ou dans la pile (S),
**caractérisé en ce que** le dispositif comprend un moyen d'écartement (44) qui écarte les parois latérales (RS) d'un conteneur roulant (R) de façon dépliée au moins perpendiculairement ou de manière légèrement oblique vers l'extérieur pour effectuer l'empilage, ledit dispositif d'écartement comportant deux tiges mobiles (47) faisant saillie dans l'emplacement d'empilage (6) et disposées à la même hauteur dans la région des parois latérales attendues (RS) du chariot roulant (R), les tiges (47) étant mobiles entre une position écartée et une position non-écartée.

2. Dispositif selon la revendication 1, **caractérisé en ce que** les tiges (47) sont mobiles latéralement vers l'extérieur pour effectuer l'écartement.

3. Dispositif selon la revendication 1 ou 2, **caractérisé en ce que** les tiges (47) sont disposées chacune sur un disque rotatif (48) orienté verticalement.

4. Dispositif selon la revendication 3, **caractérisé en ce que** les disques rotatifs (48) comportent un entraînement commun (49) par le biais d'un câble circulant.

5. Dispositif selon l'une des revendications précédentes, **caractérisé en ce que** le moyen d'écartement (44) est disposé au niveau de la paroi latérale arrière (46) délimitant l'emplacement d'empilage (6).

6. Dispositif selon l'une des revendications précédentes, **caractérisé en ce que** les chariots roulants (R) sont disposés sur des palettes de support (43) à l'emplacement d'empilage (6) de l'unité de levage et d'abaissement.

7. Procédé d'empilage automatique de paquets sur un support selon une disposition spatiale prédéterminée pour former une pile, ledit procédé comprenant les étapes consistant à :
- prendre en charge les paquets (W) amenés par un transporteur d'alimentation (2) ;
- déplacer les paquets (W) jusqu'à la position prédéterminée dans la pile (S), par positionnement des paquets (W) dans la direction X et positionnement des paquets (W) dans la direction Z et par levage et abaissement du support disposé dans un emplacement d'empilage (6) ;
des palettes (P) ou des chariots roulants (R) étant utilisés comme support, les parois latérales (RS) des chariots roulants (R) étant dépliées lors de l'empilage, ce pour quoi l'on utilise deux tiges mobiles (47) faisant saillie dans l'emplacement d'empilage (6) et disposées à la même hauteur dans la région des parois latérales attendues (RS) du chariot roulant (R), lesquelles tiges sont mobiles entre une position écartée et une position non-écartée.

8. Utilisation d'un dispositif selon l'une des revendications 1 à 6 pour mettre en oeuvre le procédé de la revendication 7.
